# EUROPEAN PATENT SPECIFICATION

(11) **EP 1 142 977 B1**
(45) Date of publication and mention of the grant of the patent: **19.11.2003**
(21) Application number: 01100947.9
(22) Date of filing: 17.01.2001
(51) Int. Cl.: C09K 19/02, C09K 19/46

(54) **Supertwisted nematic liquid crystal displays**
Supertwist nematische Flüssigkristallanzeigen
Affichages à cristaux liquides nématiques supertwist

(30) Priority: 07.03.2000 EP 00104847
(43) Date of publication of application: 10.10.2001
(73) Proprietor: MERCK PATENT GmbH, 64293 Darmstadt (DE)
(72) Inventor: Kojima, Akihiro, Atsugi-shi, Kanagawa Pref. 243-0813 (JP); Totani, Kazuo, Naka-gun, Kanagawa Pref. 255-0003 (JP)

(56) References cited:
- WO-A-95/30723
- DE-A- 19 720 296

## Description

The invention relates to supertwist nematic liquid-crystal displays (STN-LCDs) having short switching times and good steepnesses and angle dependencies, and to the novel nematic liquid-crystal mixtures used therein.

STN-LCDs as in the heading are known, for example from EP 0,131,216 B1; DE 3,423,993 A1; EP 0,098,070 A2; M. Schadt and F. Leenhouts, 17th Freiburg conference on liquid crystals (8-10.04.87); K. Kawasaki et al., SID 87 Digest 391 (20.6); M. Schadt and F. Leenhouts, SID 87 Digest 372 (20.1); K. Katoh et al., Japanese Journal of Applied Physics, Vol. 26, No. 11, L 1784-L1786 (1987); F. Leenhouts et al., Appl. Phys. Lett. 50 (21), 1468 (1987); H.A. van Sprang and H.G. Koopman, J. Appl. Phys. 62 (5), 1734 (1987); T.J. Scheffer and J. Nehring, Appl. Phys. Lett. 45 (10), 1021 (1984), M. Schadt and F. Leenhouts, Appl. Phys. Lett. 50 (5), 236 (1987) and E.P. Raynes, Mol. Cryst. Liq. Cryst. Letters, Vol. 4 (1), pp. 1-8 (1986). The term STN-LCD here includes any relatively highly twisted display element having a twist angle with a value between 160 ° and 720 °, such as, for example, the display elements of Waters et al. (C.M. Waters et al., Proc. Soc. Inf. Disp. (New York) (1985) (3rd Intern. Display Conference, Kobe, Japan), the STN-LCDs (DE OS 3,503,259), SBE-LCDs (T.J. Scheffer and J. Nehring, Appl. Phys. Lett. 45 (1984) 1021), OMI-LCDs (M. Schadt andF. Leenhouts, Appl. Phys. Lett. 50 (1987), 236, DST-LCDs (EP OS 0,246,842) or BW-STN-LCDs (K. Kawasaki et al., SID 87 Digest 391 (20.6)).

Compared with standard TN displays, STN-LCDs of this type are distinguished by significantly better steepnesses of the electrooptical characteristic curve (in the following simply called 'steepness') and associated therewith, in case of a middle and high multiplex ratio of e.g. 32 to 64 and higher, better contrast values. On the other hand, TN displays normally exhibit a higher contrast due to better dark values and lower angle dependence of the contrast than STN displays with low multiplex ratio of e.g. less than 32.

Of particular interest are STN-LCDs with extremely short switching times, in particular also at relatively low temperatures. In order to achieve short switching times, the rotational viscosities, in particular of the liquid crystal mixtures have hitherto been optimized using usually optimized combinations of liquid crystal components and optionally also monotropic additives of relatively high vapour pressure. However, the switching times achieved were not adequate for all applications.

Shorter switching times can also be achieved by reducing the thickness of the liquid crystal layer of the STN-LCD and using liquid-crystal mixtures with a higher birefringence Δn. All these approaches to shorter switching times, however, still end up with mixtures which were not adequate for every use.

Further demands for STN-LCD are a higher multiplexability (resulting in a smaller number of driving IC's), lower threshold voltages and a high steepness.

To achieve a high steepness in STN-LCDs, the liquid crystal mixtures should exhibit comparatively high values of the ratio of the elastic constants K₃₃/K₁₁ and comparatively low values of Δε/ε_{┴}, wherein Δε is the dielectric anisotropy and ε_{┴} is the dielectric constant in vertical direction to the long molecular axis.

Apart of the optimization of the contrast and the switching times such liquid crystal mixtures should fulfill further important requirements such as:
1. A broad d/p window of cell gap d and pitch p, which is defined as the range between the lower and upper limit of the d/p values.
2. A high chemical stability.
3. A high electrical resistance.
4. A low dependence of the threshold voltage on temperature and frequency.

Optimal parameters, however, cannot be achieved simultaneously for all the properties mentioned above because of opposite influence of different material parameters such as dielectric and elastic properties. Thus, the parameter combinations achieved so far are still not sufficient, especially for high multiplex STN-LCDs (with a multiplex rate in the range of 1/400), but also for middle and low multiplex STN-LCD (multiplex rate in the range of 1/64 and 1/16, respectively).

Therefore, there continues to be a great demand for improved STN-LCDs having short switching times and, at the same time, a broad service-temperature range, a high steepness (i.e. low steepness values), good angle dependency of the contrast and low threshold voltage, which meet the abovementioned requirements.

The invention has the object of providing STN-LCDs which only have the above mentioned disadvantages to a small extent, or not at all, and at the same time have very useful overall properties, especially short switching times at low temperatures, a high steepness and imporved temperature dependence of the operating voltage due to an improved frequency dependence of the dielectric constant.

It has now been found that this object can be achieved if nematic liquid-crystal mixtures are used which comprise one more compounds of formula I 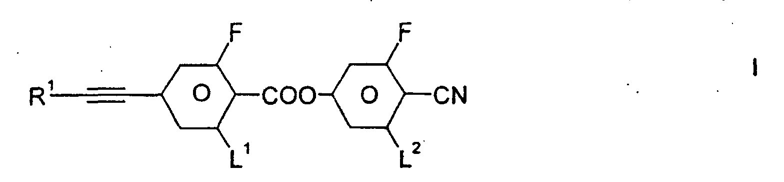 and one or more alkenyl compounds of formula II 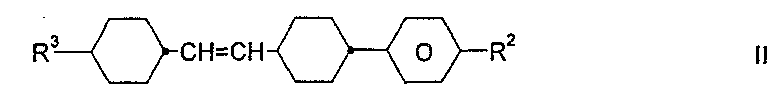 wherein
- R¹ and R²: are independently of each other an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another,
- R³: is an alkenyl group with 2 to 7 C atoms, and
- L¹ and L²: are each independently H or F.

The use of compounds of formulae I and II in the liquid crystal mixtures for STN-LCDs according to the invention especially leads to
- a high steepness
- a low threshold voltage with a low temperature dependence, and
- short switching times especially at low temperatures.

Furthermore, the liquid crystal mixtures according to the present invention show the following advantageous properties
- a low viscosity,
- a low temperature dependence of the threshold voltage and the operating voltage,
- improved stability of the mixture in the display at low temperatures.

The invention thus relates to an STN-LCD having
- two plane-parallel outer plates which, together with a frame, form a cell,
- a nematic liquid-crystal mixture of positive dielectric anisotropy which is present in the cell,
- electrode layers with superposed alignment layers on the insides of the outer plates,
- a pre-tilt angle between the longitudinal axis of the molecules at the surface of the outer plates and the outer plates of from 1 degree to 30 degrees, and
- a twist angle of the liquid-crystal mixture in the cell from alignment layer to alignment layer with a value of between 22.5 and 600°,
wherein the nematic liquid-crystal mixture essentially consists of
a) 15-80 % by weight of a liquid-crystalline component A, comprising one or more compounds having a dielectric anisotropy of more than +1.5;
b) 20-85 % by weight of a liquid-crystalline component B, comprising one or more compounds having a dielectric anisotropy from -1.5 to +1.5;
c) 0-20 % by weight of a liquid-crystalline component D, comprising one or more compounds having a dielectric anisotropy of less than -1.5 and
d) optionally an optically active component C in such an amount that the ratio between the layer thickness (separation of the plane-parallel outer plates) and the natural pitch of the chiral nematic liquid-crystal mixture is from 0.2 to 1.3,
characterized in that the liquid crystal mixture comprises at least one compound of formula I 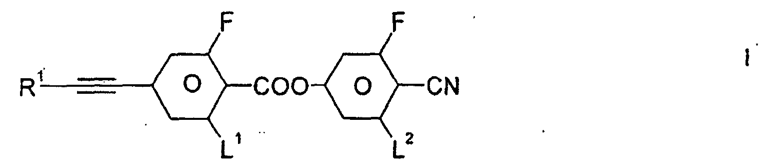 and at least one alkenyl compound of formula II 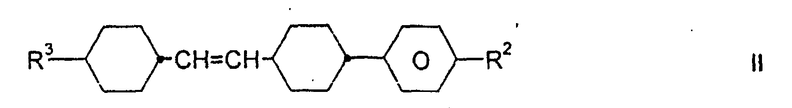 wherein
- R¹ and R²: are independently of each other an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another,
- R³: is an alkenyl group with 2 to 7 C atoms, and
- L¹ and L²: are each independently H or F.

Another object of the invention are inventive liquid crystal mixtures as described above and below for use in STN-LCDs.

Especially preferred are compounds of formula I wherein L¹ and L² are F.

Further preferred are compounds of formula I wherein R¹ is straight chain alkyl with 1 to 8, in particular 1 to 5, C atoms.

Especially preferred are compounds of formula II wherein R³ is 1E-alkenyl or 3E-alkenyl with 2 to 7 C atoms.

Further preferred are compounds of formula II wherein R² is alkyl or alkoxy, in particular alkoxy, with 1 to 8 C atoms.

Especially preferred compounds of formula II are those of subformula IIa 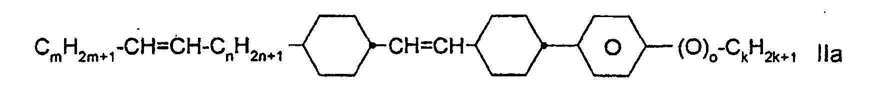 wherein
- k: is 1, 2, 3, 4 or 5,
- m and n: are independently of each other 0, 1, 2 or 3, with m + n ≤ 5, and
- o: is 0 or 1.

Preferably component A further comprises one or more cyano compounds of the following formulae 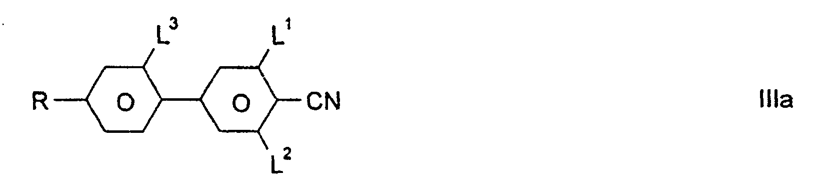 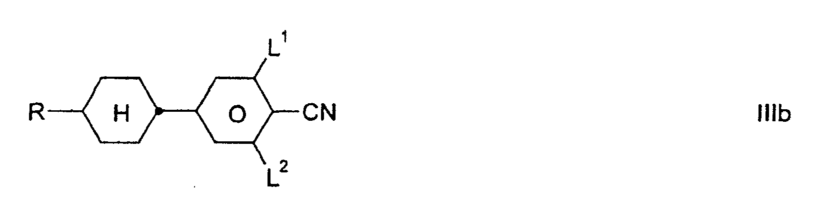 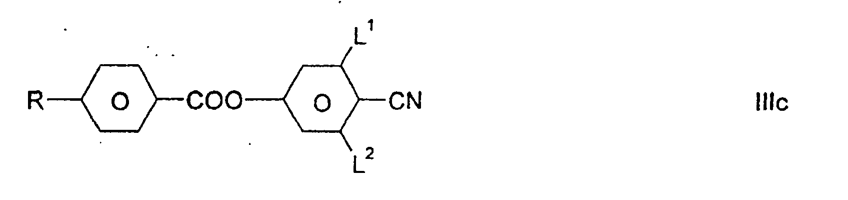 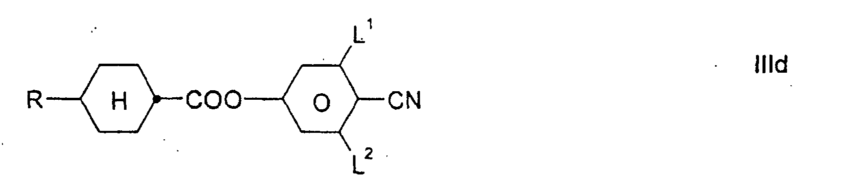 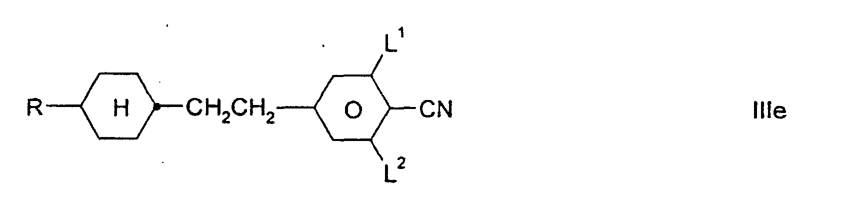 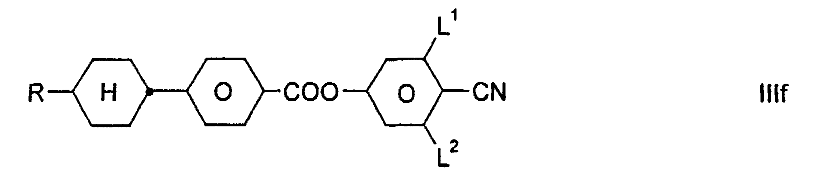 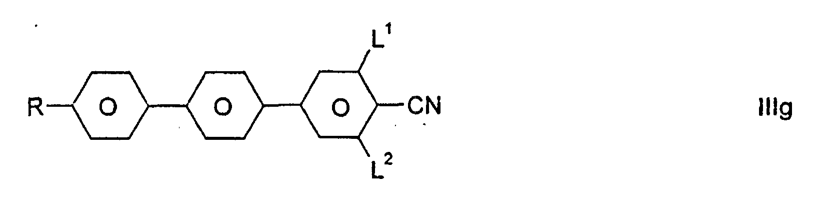 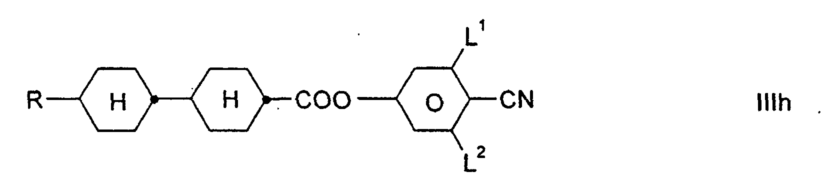 wherein R has one of the meanings of R¹ in formula I , and L¹, L² and L³ are independently of each other H or F. Especially preferably R in these compounds is alkyl or alkoxy with 1 to 8 C atoms.

Especially preferred are compounds of formula IIIb, IIIc and IIIf, in particular those wherein L¹ and/or L² are F. Further preferred are compounds of formula IIIh, wherein L² is H and L¹ is H or F, in particular F.

In another preferred embodiment component A comprises one or more 3,4,5-trifluorophenyl compounds selected from the following formulae 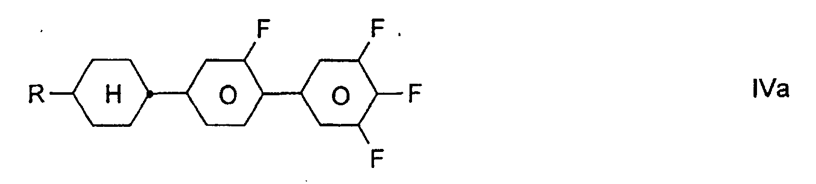 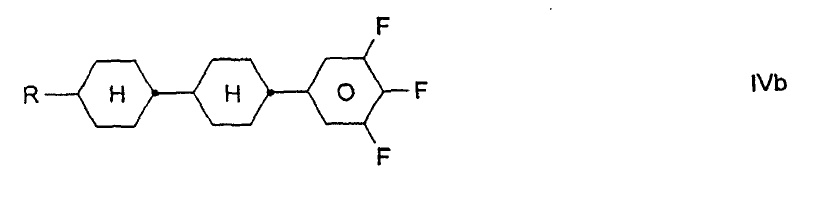 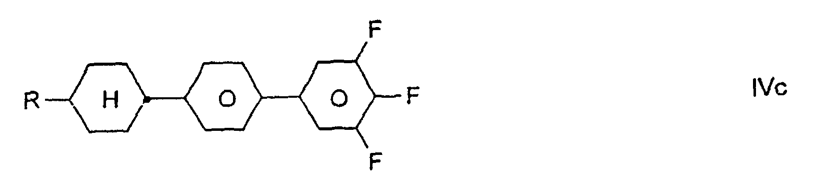 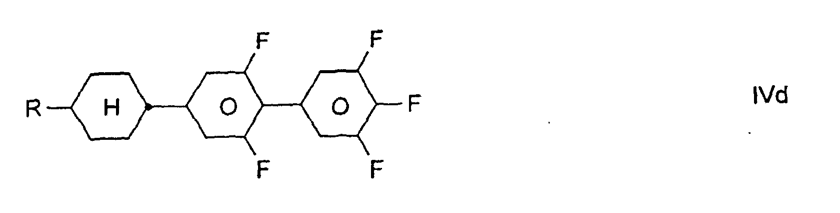 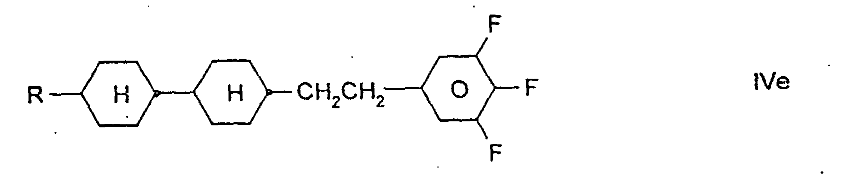 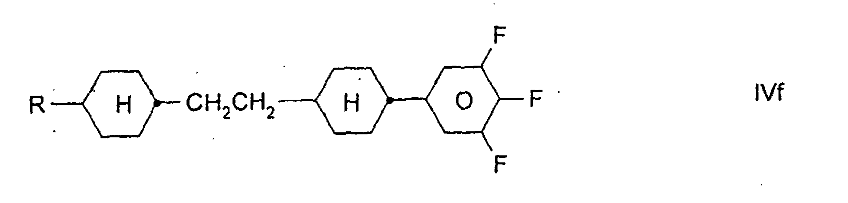 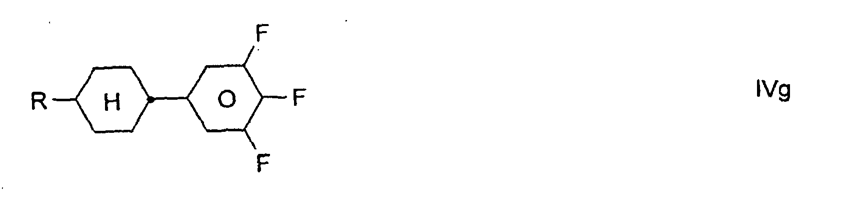 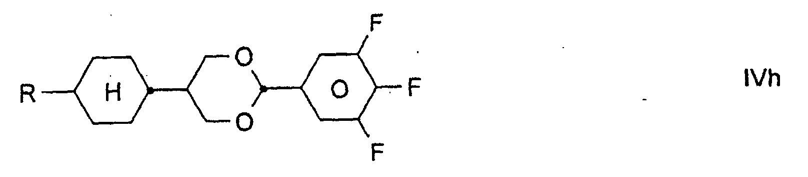 and/or one or more compounds having a polar terminal group selected from the following formulae 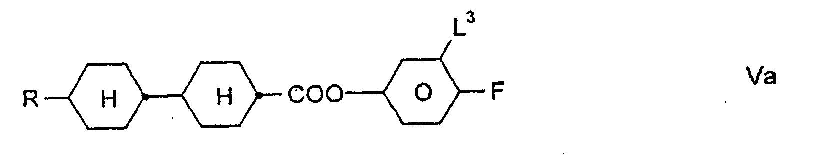 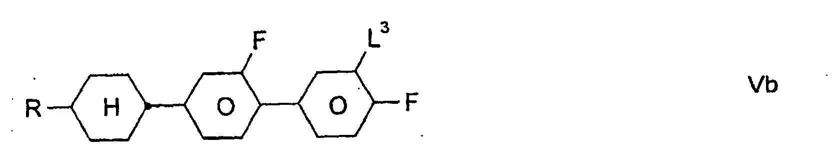 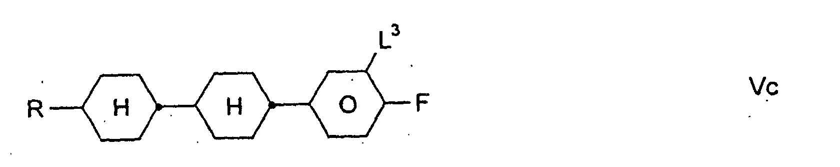 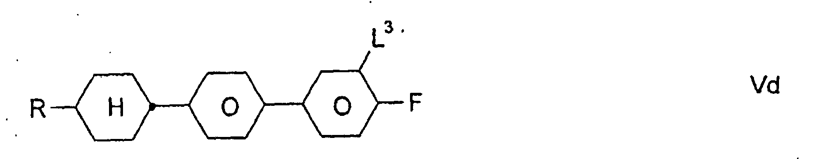 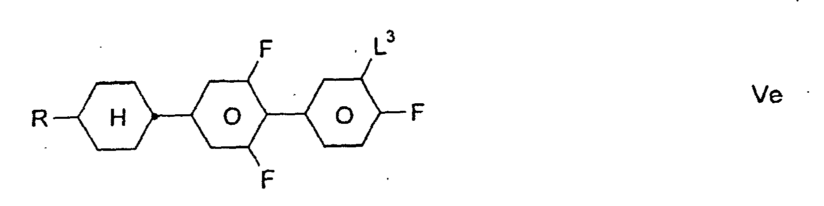 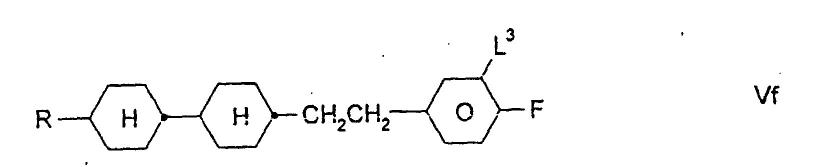 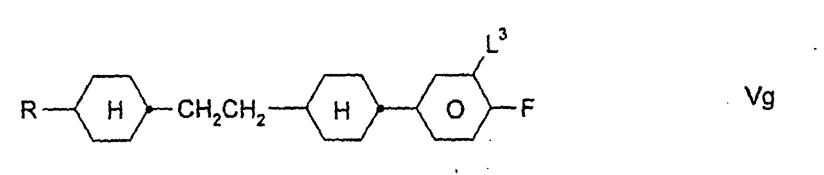 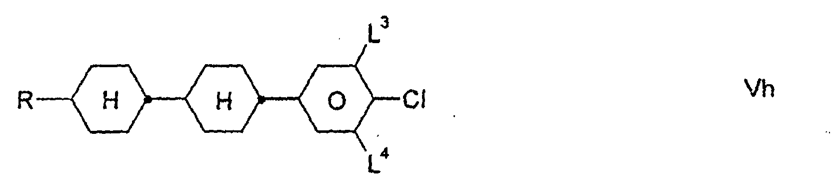 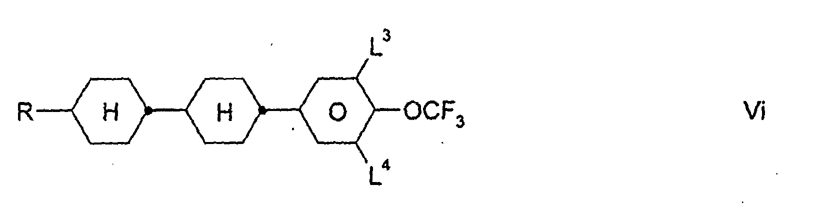 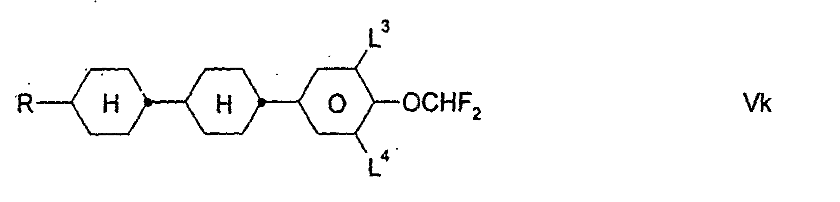 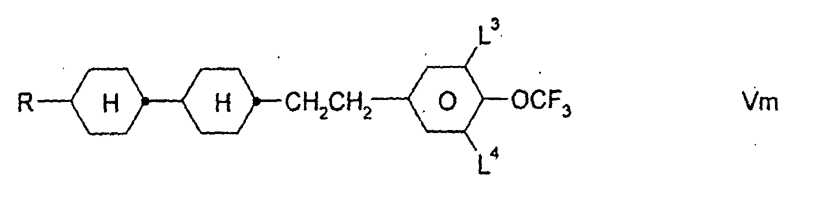 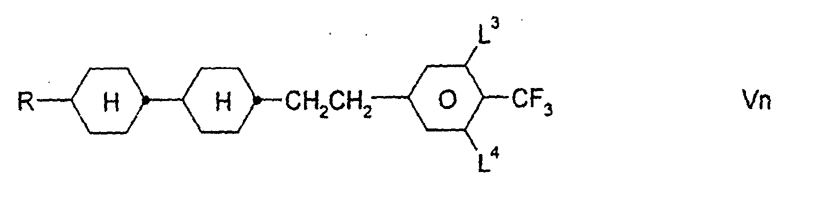 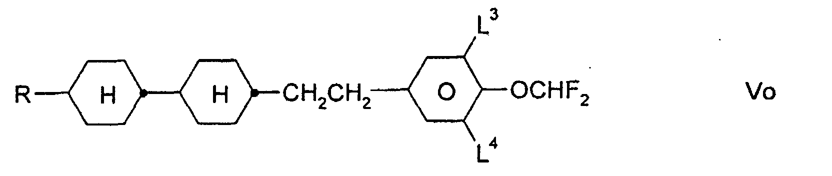 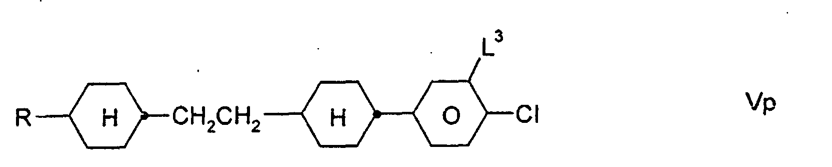 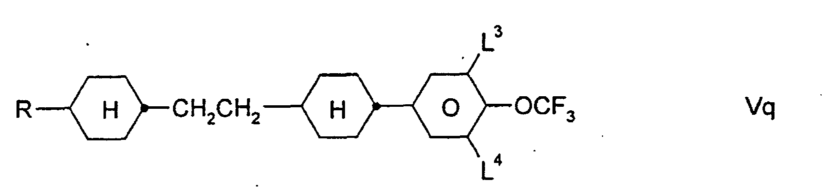 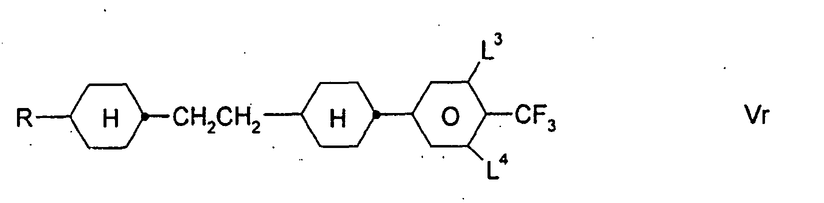 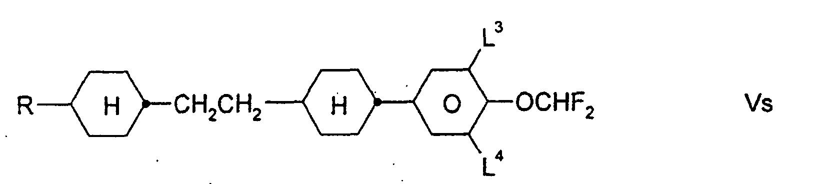 wherein R has one of the meanings of R¹ in formula I , and L³ and L⁴ are independently of each other H or F. Especially preferably R in these compounds is alkyl or alkoxy with 1 to 8 C atoms.

Especially preferred are compounds of formulae IVa, IVb, IVc, IVd, IVh and Vi, in particular compounds of formulae IVa, IVh and Vi.

Preferred liquid-crystal mixtures which can be used according to the invention contain one or more compounds from component A preferably in a proportion of 15 % to 80 %, very preferably 20 % to 70 %. These compounds or this compound have a dielectric anisotropy Δε ≥ +3, preferably Δε ≥ +8, in particular Δε ≥ +12.

Preferred liquid-crystal mixtures contain one or more compounds from component B, preferably in a proportion of 20 to 85 %, very preferably of 30 to 80 %. The compounds of component B have in particular low values of the rotational viscosity γ₁.

Preferably component B comprises one or more compounds selected from the group comprising IV1 to IV9 with two rings 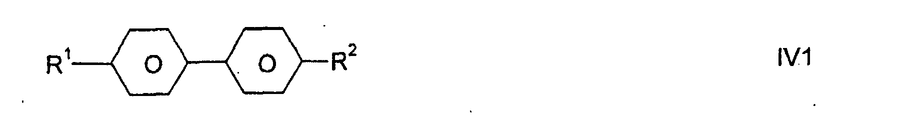 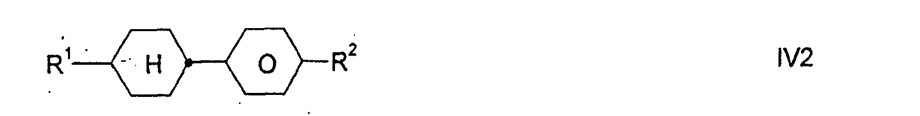 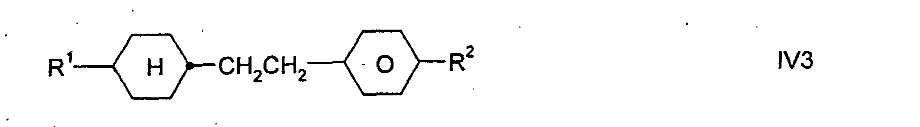 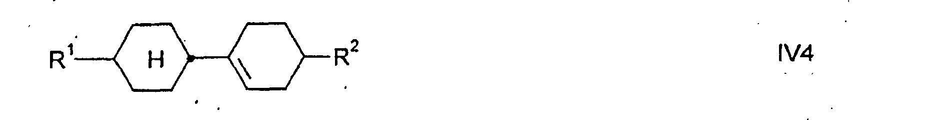 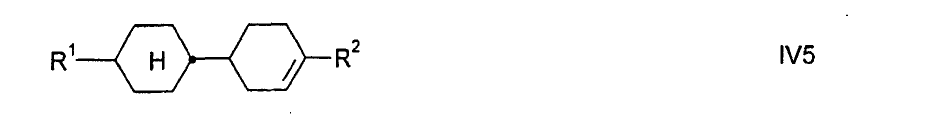 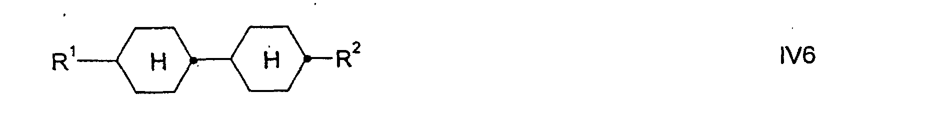 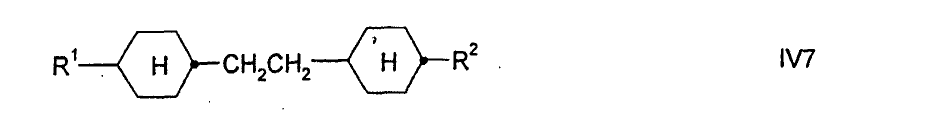 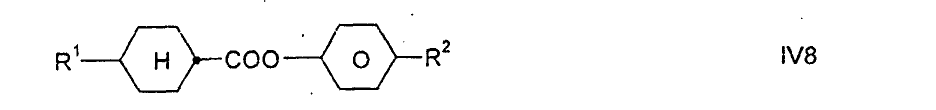 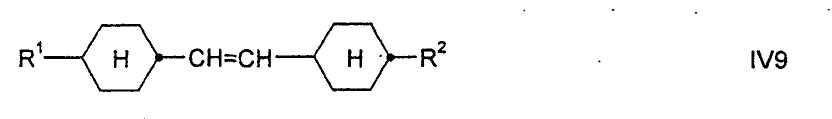 and/or one or more compounds selected from the group comprising IV10 to IV24 with three rings 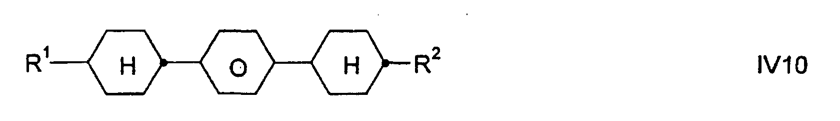 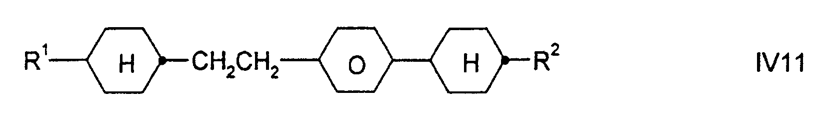 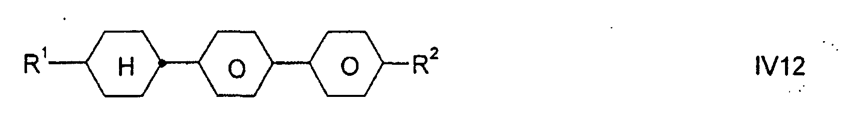 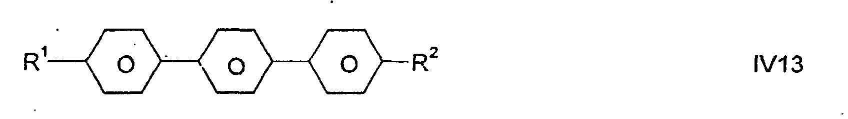 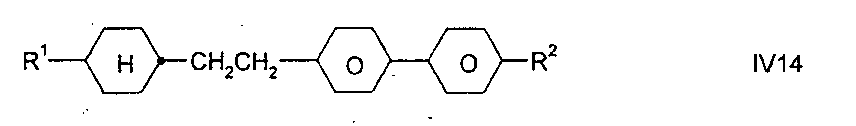 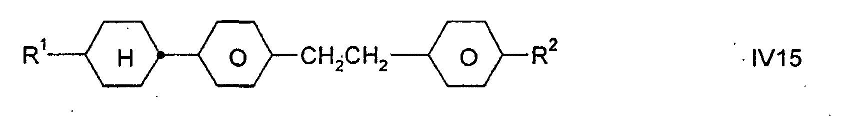 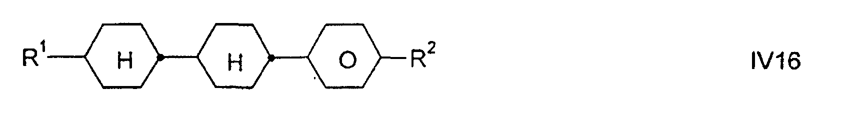 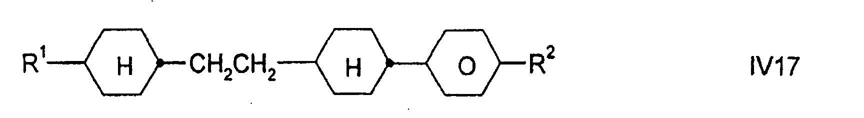 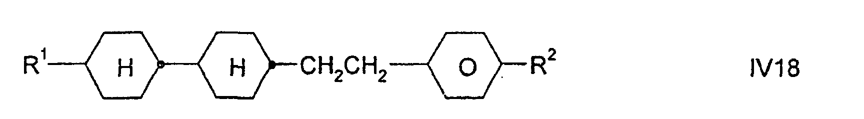 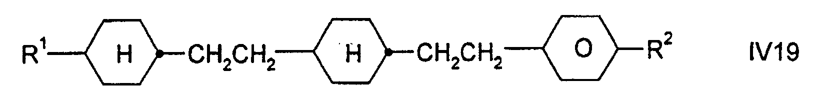 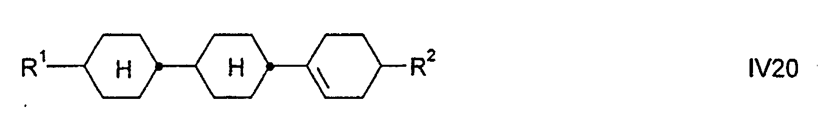 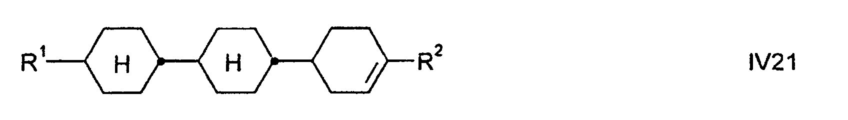 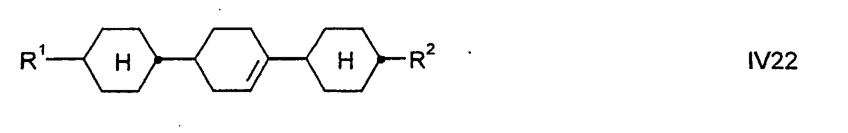 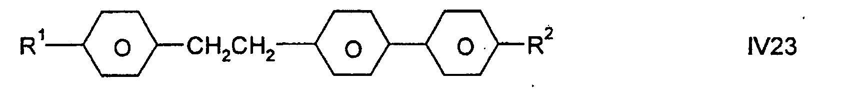 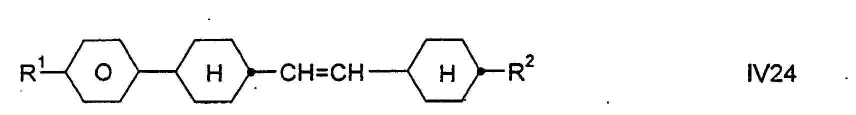 and/or one or more compounds selected from the group comprising IV25 to IV31 with four rings 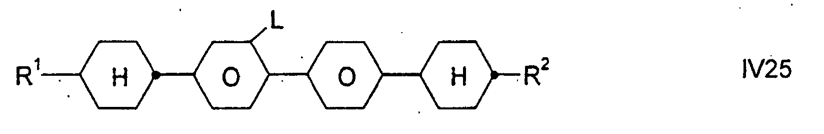 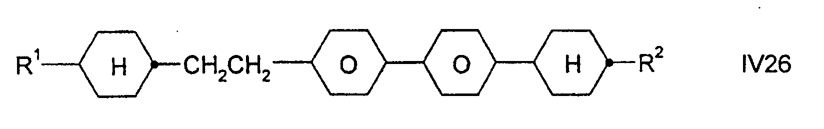 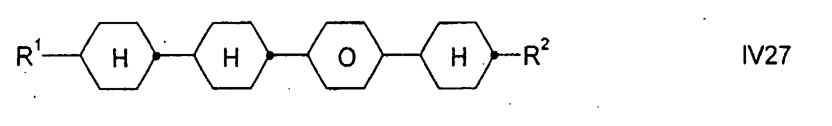 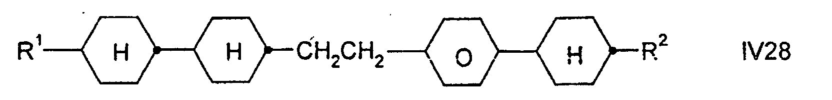 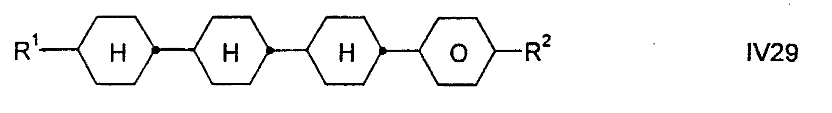 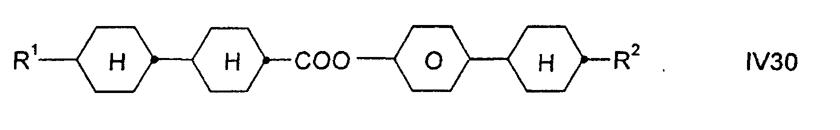 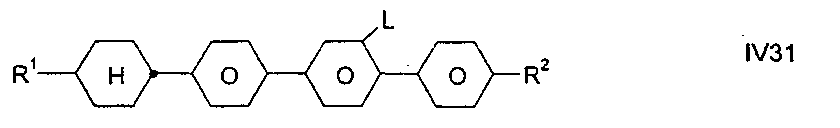 wherein R¹ and R² have independently of each other one of the meanings of formula I and II and the 1,4-phenylene groups in formulae IV10 to IV19 and formulae IV23 to IV31 can also independently of each other be mono- or polysubstituted by F.

Especially preferred are compounds of formulae IV 25 to IV 31 wherein R' is alkyl and R² is alkyl or alkoxy, each having 1 to 7 C-atoms. Further preferred are compounds of formulae IV 25 and IV 31 wherein L is F.

Very preferred are compounds of formulae IV25 and IV31.

R¹ and R² in the compounds of formulae IV1 to IV30 is particularly preferably straight chain alkyl or alkoxy with 1 to 12 C-atoms.

In another preferred embodiment the liquid crystal mixtures comprise one or more alkenyl compounds of formula VI 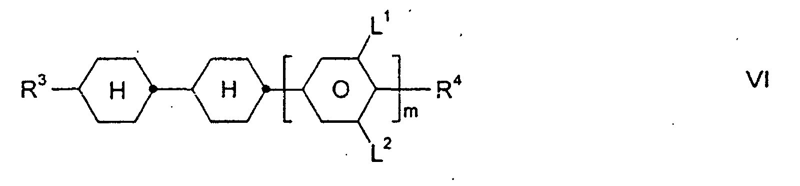 wherein
- R³: is an alkenyl group with 2 to 7 C atoms,
- R⁴: has one of the meanings of R¹ in formula I, or, in case m is 1, may also denote Q-Y,
- Q: is -CF₂-, -OCF₂-, -CFH-, -OCFH- or a single bond,
- Y: is F or Cl,
- m: is 0 or 1, and
- L¹ and L²: are independently of each other H or F.

Formula VI comprises the following subformulae

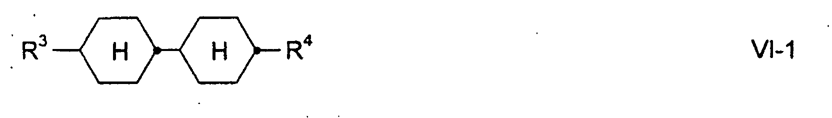

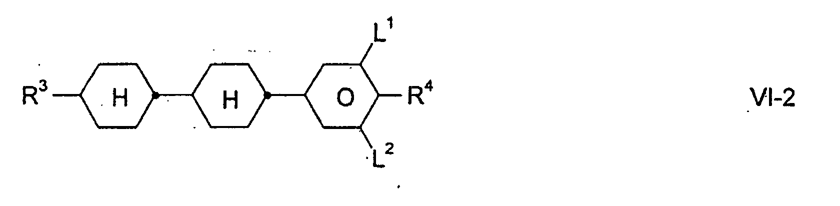

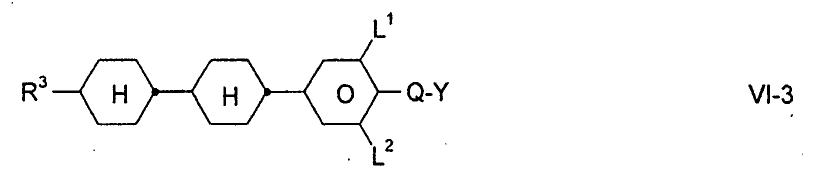

Especially preferred are STN-LCDs comprising at least one compound selected from formulae VI-1 and VI-2, in particular STN-LCDs comprising at least one compound of each formula VI-1 and VI-2.

In the formulae VI-1, VI-2 and VI-3, R³ is especially preferably 1 E-alkenyl oder 3 E-alkenyl with 2 to 7 C-atoms.

Especially preferred compounds of formula VI-1 are those wherein R⁴ is alkenyl with 2 to 7 C atoms, in particular those of formulae I-1a to I-1e 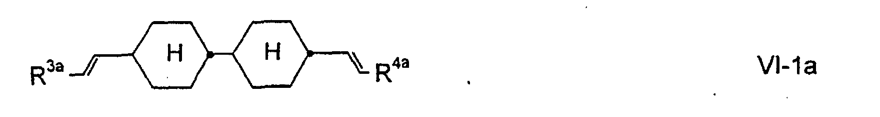 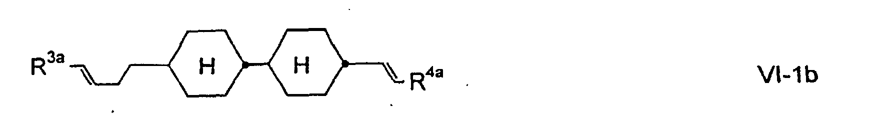 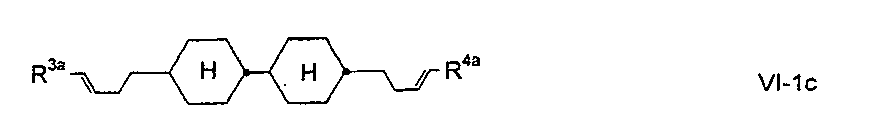 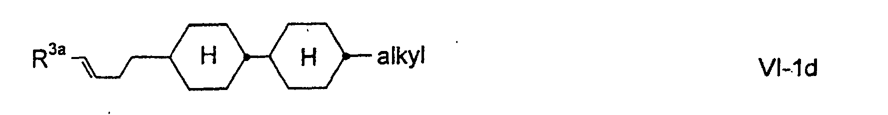 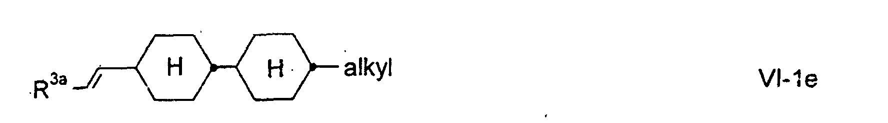 wherein R^{3a} and R^{4a} are each independently H, CH₃, C₂H₅ or n-C₃H₇ and "alkyl" is an alkyl group with 1 to 7 C atoms.

Particularly preferred are STN-LCDs according to the present invention, wherein the liquid crystal mixture comprises at least one compound selected from formulae VI-1d and VI-1e. Further preferred are STN-LCDs comprising at least one compound selected from formulae VI-1a and VI-1c, wherein R^{3a} and R^{4a} respectively have the same meaning.

Of the compounds of formula VI-2 especially preferred are those wherein L¹ and L² are denoting H.

Further preferred compounds of formula VI-2 are those wherein R⁴ is alkyl with 1 to 8, in particular 1, 2 or 3 C-atoms, and R³ is 1 E-alkenyl or 3E-alkenyl with 2 to 7, in particular 2, 3 or 4 C-atoms.

Very preferred compounds of formula VI-2 are those selected from the following formulae 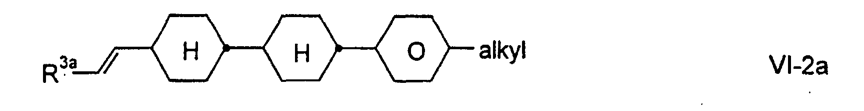 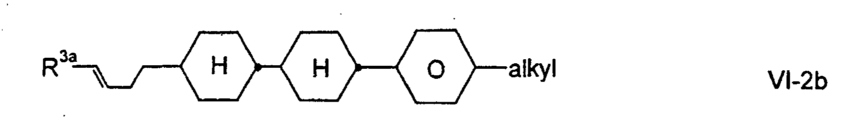 wherein R^{3a}, R^{4a} and "alkyl" have the meaning given above, in particular those wherein R^{3a} is H.

Of the compounds of formula VI-3 especially preferred are those wherein one or both of L¹ and L² are denoting F and Q-Y is F or OCF₃.

Further preferred compounds of formula VI-3 are those wherein R³ is 1E-alkenyl or 3E-alkenyl with 2 to 7, in particular 2, 3 or 4 C-atoms.

The compounds of formulae VI-1 and VI-2 having a dielectric anisotropy from - 1.5 to + 1.5 belong to component B as defined above. Polar compounds of formula VI-2 and in particular of formula VI-3 having a dielectric anisotropy of more than + 1.5 belong to component A as defined above.

The use of compounds of formula VI leads to inventive mixtures with particularly low values of the rotational viscosity and to STN-LCD's with a high steepness of the electrooptical curve and fast switching times especially at low temperatures.

In a further preferred embodiment the liquid crystal mixtures comprise one or more liquid crystalline tolane compounds. Due to the high birefringence of the tolane compounds it is possible to reduce the cell thickness of the STN-LCDs, leading to significantly shorter switching times. The tolane compounds are preferably selected from group T comprising Ta to Th 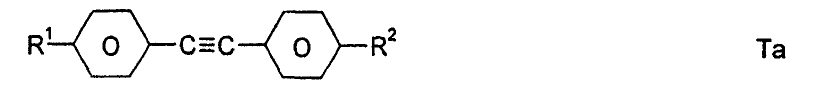 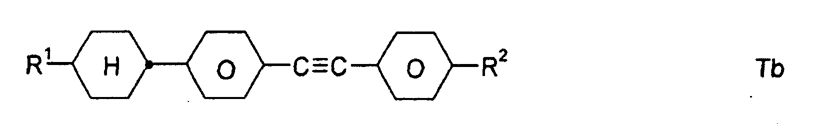 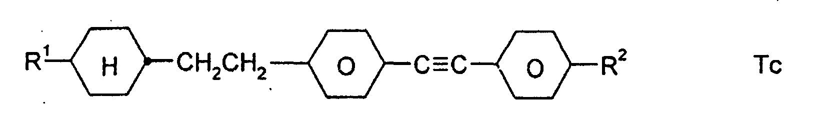 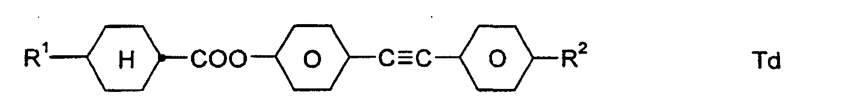 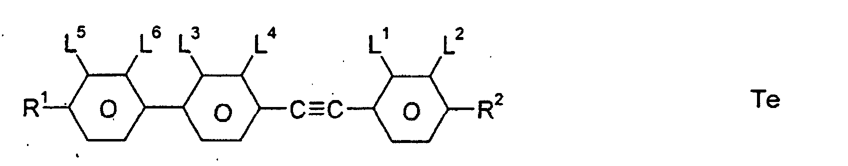 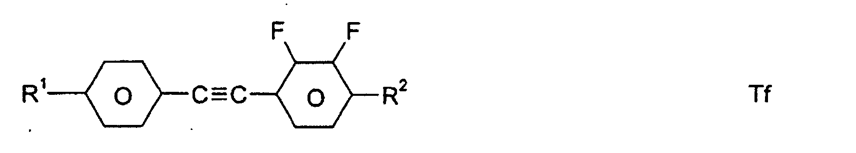 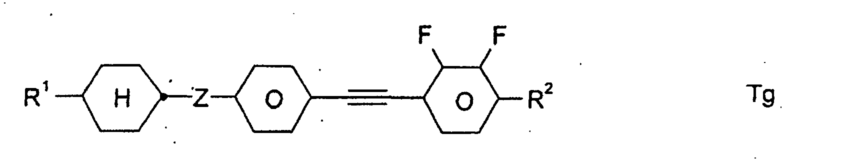 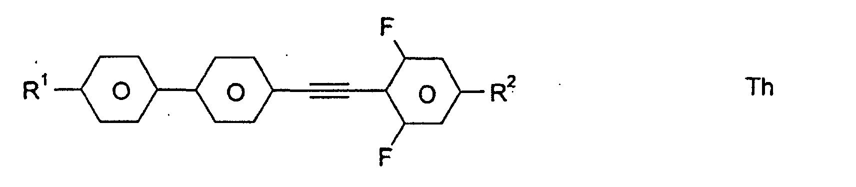 wherein
- R¹ and R²: independently of each other have one of the meanings of formulae I and II,
- Z: is -COO-, -CH₂CH₂- or a single bond, and
- L¹ to L⁶: are independently of each other H or F.

Especially preferred are compounds of formula Th.

Particularly preferred compounds of formula T2e are those wherein one, two or three of the groups L¹ to L⁶ are F and the others are H, with both of L¹ and L², L³ and L⁴, L⁵ and L⁶ not being at the same time F.

The proportion of compounds from group T is preferably 2 % to 55 %, in particular 5 % to 35 %.

The liquid crystal mixtures optionally also comprise an optically active component C, in an amount such that the ratio between the layer thickness (separation of the plane-parallel carrier plates) and the natural pitch of the chiral nematic liquid crystal mixture is more than 0.2 suitable to the desired twist angle. Suitable dopants can be selected from a wide variety of known chiral materials and commercially available dopants such as cholesteryl nonanoate, S 811 (Merck KGaA, Darmstadt, FRG) and CB 15 (Merck Ltd., former, BDH, Poole, UK). The choice thereof is not crucial per se.

The amount of compounds of component C is preferably 0 to 10 %, in particular 0 to 5 %, very preferably 0 to 3 %.

The liquid crystal mixtures may also comprise up to 20 % of one or more compounds having a dielectric anisotropy of -2 or less (component D).

The component D preferably comprises one or more compounds containing the structural element 2,3-difluoro-1,4-phenylene, such as described e.g. in DE-OS 38 07 801, 38 07 861, 38 07 863, 38 07 864 and 38 07 908. Especially preferred are tolane compounds with this structural element according to the PCT/DE 88/00133.

Further known compounds of component D are e.g. 2,3-Dicyanohydroquinone or cyclohexane derivatives containing the structural element 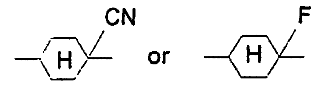 as in DE-OS 32 31 707 or DE-OS 34 07 013.

The proportion of compounds of the component D comprising one or more compounds having a dielectric anisotropy < -1.5 is preferably about 0 % to 10 %, in particular about 0 % to 5 %. Those skilled in the art can easily adjust this proportion to produce the threshold voltage desired, it being possible to use, in principle, all customary liquid-crystal compounds where Δε < -1.5.

Especially preferably the inventive displays contain no compounds of component D.

The individual compounds of the formulae I, II, III, IV, V, VI, T and also other compounds which can be used in the STN-LCDs according to the invention, are either known or can be prepared analogously to the known compounds.

In particular the compounds of the formulae II have low viscosities, in particular low rotational viscosities, low values of the ratio of the elastic constants (K₃/K₁) and lead therefore to short switching times, whereas the compounds of formula II with a high dielectric anisotropy, especially when being present in high amounts like in the inventive displays, lead to a reduced threshold voltage.

The term alkenyl in the meanings of R and R' to R⁴ is comprising straight chain and branched alkenyl groups, in case of R with 2 to 7 C atoms, in case of R, R², R³ and R⁴ with 2 to 12 C atoms. Straight chain alkenyl groups are preferred. Further preferred alkenyl groups are C₂-C₄-1E-alkenyl, C₄-C₇-3E-alkenyl, C₅-C₇-4-alkenyl, C₆-C₇-5-alkenyl and C₇-6-alkenyl, in particular C₂-C₇-1E-alkenyl, C₄-C₇-3E-alkenyl and C₅-C₇-4-alkenyl.

Examples for preferred alkenyl groups are vinyl, 1E-propenyl, 1E-butenyl, 1E-pentenyl, 1E-hexenyl, 1E-heptenyl, 3-butenyl, 3E-pentenyl, 3E-hexenyl, 3E-heptenyl, 4-pentenyl, 4Z-hexenyl, 4E-hexenyl, 4Z-heptenyl, 5-hexenyl and 6-heptenyl. Alkenyl groups with up to 5 C atoms are particularly preferred. Very particularly preferred are vinyl, 1E-propenyl, 1E-butenyl, 3E-butenyl and 3E-pentenyl, in particular vinyl and 3E-butenyl.

In further particularly preferred embodiments, the liquid crystal mixtures according to the present invention contain
- one or,more, preferably two to four, compounds of formula IIa,
- 3 to 35 %, preferably 5 to 25 % by weight of one or more, in particular one to three, compounds of formula I,
- 8 to 45 % preferably 10 to 30 % by weight of one or more, in particular two to five, compounds of formula II,
- 10 to 45 %, preferably 15 to 35 % by weight of one or more, in particular two to six, cyano compounds of formula III, which are especially preferably selected from formulae IIIb and IIIc,
- 10 to 60 %, preferably 25 to 50 % by weight of one or more, in particular two to six, alkenyl compounds of formula VI,
- 5 to 25 %, preferably 8 to 20 % by weight of one or more, in particular one to three, tolane compounds of group T, which are especially preferably selected from formula Th,
- more than 50 % by weight of alkenyl compounds,

Further preferred embodiments relate to liquid crystal mixtures that
- contain no compounds of component B of formulae IV-1 to IV-31 and/or no compounds of component D,
- essentially consist of compounds of formulae I, II, III, VI and group T,

The inventive mixtures are characterized, especially when used in STN-LCDs with large cell gaps, by their low total switching times (tₜₒₜ = tₒₙ + t_{off}). Low switching times are an especially important requirement for STN-LCDs e.g. when used in laptops, to allow better displaying of the cursor movements. Especially preferred are displays having switching times of 300 msec or less, in particular 250 msec or less.

The inventive STN-LCDs are characterized by a low threshold voltage. Preferably the threshold voltage is 1.5 V or less.

The liquid crystal mixtures in the inventive STN-LCDs are dielectrically positive with Δε ≥ 1.5. Particularly preferred are mixtures with Δε ≥ 3, very particularly preferred mixtures with Δε ≥ 5.

The inventive liquid crystal mixtures exhibit advantageous values of the threshold voltage V_{10/0/20} and of the rotational viscosity γ₁. If the value for the optical path difference d · Δn is fixed, the value for the cell gap d is determined by the optical anisotropy Δn. In particular in case of high values of d · Δn, the use of liquid crystal mixtures according to the present invention with a higher value of Δn is preferred, since in this case the value for d can be chosen to be comparatively small, leading to improved values of the switching time. However, inventive liquid crystal displays comprising inventive liquid crystal mixtures with smaller values of Δn, too, are characterized by advantageous values of the switching times.

The liquid crystal mixtures according to the present invention are further characterized by their advantageous values of the steepness, and, in particular at temperatures above 20 °C, can be driven at high multiplex rates. Furthermore, the mixtures exhibit a high stability, a high electrical resistance and a low frequency dependency of the threshold voltage. The liquid crystal displays according to the present invention show a broad working temperature range and a good viewing angle dependency of the contrast.

The construction of the liquid-crystal display elements according to the present invention from polarizers, electrode base plates and electrodes having a surface treatment such that the preferential orientation (director) of the liquid-crystal molecules in each case adjacent thereto is usually mutually twisted from one electrode to the other by a value of 160 ° to 720 °, corresponds to the customary construction for display elements of this type. The term customary construction here is used in broad terms and also includes all derivatives and modifications of supertwist cells, in particular also matrix display elements. The surface tilt angle at the two support plates may be identical or different. Identical tilt angles are preferred.

In TN-displays according to the invention the tilt angle between the long axes of the molecules at the surface of the base plates and the base plate is preferably in the range from 0° to 7°, in particular from 0,01° to 5°, very preferably from 0,1 to 2°. In STN-displays according to the invention the tilt angle is preferably in the range from 1° to 30°, in particular from 1° to 12°, very preferably from 3° to 10°.

The twist angle of the liquid crystal mixture between the alignment layers on the two base plates of the cell is in case of inventive TN-displays in the range from 22,5° to 170°, in particular from 45° to 130°, very preferably from 80° to 115°. In case of STN-displays the twist angle is in the range from 100° to 600°, in particular from 170° to 300°, very preferably from 180° to 270°.

The liquid-crystal mixtures which can be used according to the invention are prepared in a manner customary per se. In general, the desired amount of the components used in a relatively small amount is dissolved in the components making up the principal constituent, expediently at elevated temperature. It is also possible to mix solutions of the components in an organic solvent, for example in acetone, chloroform or methanol, and to remove the solvent again, after mixing, for example by distillation.

The dielectrics may also contain further additives known to those skilled in the art and described in the literature. For example, 0-15 % of pleochroic dyes may be added.

In the present patent application and in the following examples all chemical structures of liquid crystal compounds are given by acronyms the transformation of which into chemical formulae is done as shown in the following. All residues CₙH₂ₙ₊₁ and CₘH₂ₘ₊₁ are straight-chained alkyl groups with n resp. m carbon atoms. The code of Table B is self-explanatory. In Table A only the acronym for the core structure is given. In a concrete compound this acronym is followed by a dash and a code for the substituents R¹, R², L¹ and L² as follows:

The compounds given in Tables A and B are particularly preferred components of the present invention.

| Code for R¹, R², L¹, L², L³ | R¹ | R² | L¹ | L² | L³ |
|---|---|---|---|---|---|
| nm | CₙH₂ₙ₊₁ | CₘH₂ₘ₊₁ | H | H | H |
| nOm | OCₙH₂ₙ₊₁ | CₘH₂ₘ₊₁ | H | H | H |
| nO.m | CₙH₂ₙ₊₁ | OCₘH₂ₘ₊₁ | H | H | H |
| n | CₙH₂ₙ₊₁ | CN | H | H | H |
| nN.F | CₙH₂ₙ₊₁ | CN | H | H | F |
| nN.F.F | CₙH₂ₙ₊₁ | CN | H | F | F |
| nF | CₙH₂ₙ₊₁ | F | H | H | H |
| nOF | OCₙH₂ₙ₊₁ | F | H | H | H |
| nF.F | CₙH₂ₙ₊₁ | F | H | H | F |
| nmF | CₙH₂ₙ₊₁ | CₘH₂ₘ₊₁ | F | H | H |
| nOCF₃ | CₙH₂ₙ₊₁ | OCF₃ | H | H | H |
| n-Vm | CₙH₂ₙ₊₁ | -CH=CH-CₘH₂ₘ₊₁ | H | H | H |
| nV-Vm | CₙH₂ₙ₊₁-CH=CH- | -CH=CH-CₘH₂ₘ₊₁ | H | H | H |

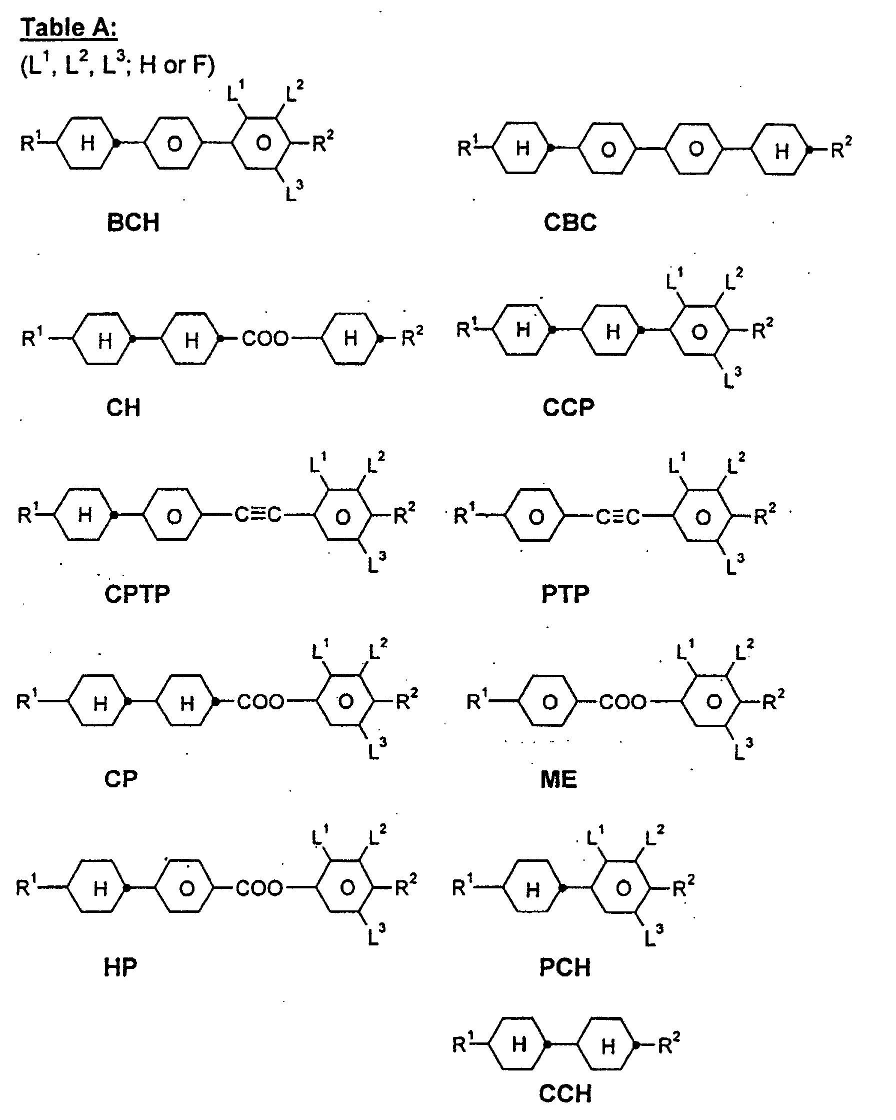

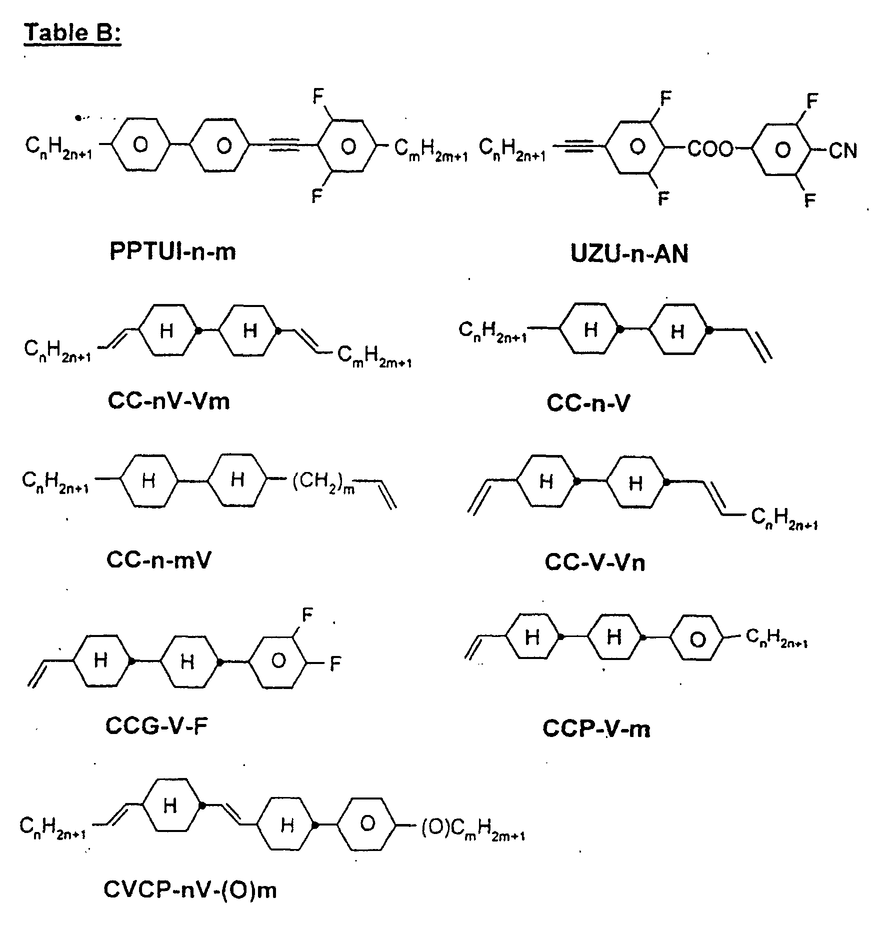

The examples below are intended to illustrate the invention, without representing a limitation.

The abbreviations have the following meanings:
- Δn: birefringence at 589 nm and 20 °C
- nₒ: ordinary refractive index (589 nm, 20 °C)
- Δε: dielectric anisotropy (1 kHz, 20 °C)
- ε_{┴}: dielectric constant perpendicular to the long molecular axis (1 kHz, 20 °C)
- Tₐᵥₑ: average switching time = 0.5 (Tₒₙ + T_{off})
- Tₒₙ: time from switching on until 90 % of the maximum contrast is reached,
- T_{off}: time from switching off until 10 % of the maximum contrast is reached,
- V₁₀: threshold voltage (volt)
- V₉₀: saturation voltage
- V₉₀/V₁₀: steepness
- γᵣₒₜ: rotational viscosity (mPa·s)

In the foregoing and the following, unless indicated otherwise, all temperatures are in degree Celsius and percentages are % by weight. The values for switching times and viscosities are related to 20 °C. The switching time is the average value tₐᵥₑ as defined above. The STN-LCD is addressed in multiplex operation with a multiplex rate of 1/64 and a bias of 1/7.

### Example 1

An STN display contains a liquid crystal mixture with the following properties:

| | |
|---|---|
| Clearing point | + 95 °C |
| Δn | 0.1443 |
| V₁₀ | 1.45 V |
| V₉₀/V₁₀ | 1.054 |
| Tₐᵥₑ | 149 msec |

consisting of

| | |
|---|---|
| PCH-3N.F.F | 18.00 % |
| ME2N.F | 4.00 % |
| ME3N.F | 4.00 % |
| UZU-3A-N | 8.00 % |
| CC-5-V | 4.00 % |
| CC-3-V1 | 7.00 % |
| CVCP-1V-O1 | 4.00 % |
| CVCP-V-O1 | 4.50 % |
| CVCP-V-1 | 4.50 % |
| CCP-V-1 | 15.00 % |
| CCP-V2-1 | 15.00 % |
| PPTUI-3-2 | 12.00 % |

## Claims

1. Supertwist nematic liquid-crystal display containing
- two plane-parallel outer plates which, together with a frame, form a cell,
- a nematic liquid-crystal mixture of positive dielectric anisotropy which is present in the cell,
- electrode layers with superposed alignment layers on the insides of the outer plates which address each pixel by orthogonal row wave forms,
- pre-tilt angle between the longitudinal axis of the molecules at the surface of the outer plates and the outer plates of from 1 degree to 30 degrees, and
- a twist angle of the liquid-crystal mixture in the cell from alignment layer to alignment layer with a value of between 22.5 and 600°, wherein the nematic liquid-crystal mixture essentially consists of
a) 15-80 % by weight of a liquid-crystalline component A, comprising one or more compounds having a dielectric anisotropy of more than +1.5;
b) 20-85 % by weight of a liquid-crystalline component B, comprising one or more compounds having a dielectric anisotropy from -1.5 to +1.5;
c) 0-20 % by weight of a liquid-crystalline component D, comprising one or more compounds having a dielectric anisotropy of less than -1.5, and
d) an optically active component C in such an amount that the ratio between the layer thickness (separation of the plane-parallel outer plates) and the natural pitch of the chiral nematic liquid-crystal mixture is from 0.2 to 1.3,
**characterized in that** the liquid crystal mixture comprises at least one compound of formula I 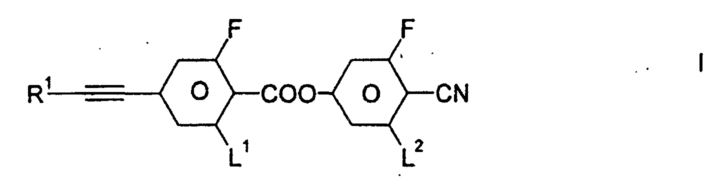 and at least one alkenyl compound of formula II 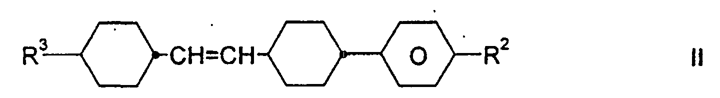 wherein
R¹ and R² are independently of each other an optionally fluorinated alkyl, alkoxy, alkenyl or alkenyloxy group with 1 to 12 C atoms, wherein one or two non-adjacent CH₂ groups can be replaced by -O-, -CH=CH-, -CO-, -OCO- or -COO- in such a manner that O atoms are not directly adjacent to one another is an alkenyl group with 2 to 7 C atoms,
R³ is an alkenyl group with 2 to 7 C atoms, and
L¹ and L² are each independently H or F.

2. Display according to claim 1, **characterized in that** it comprises one or more compounds of formula IIa 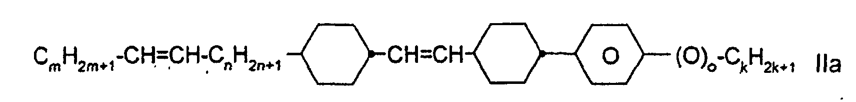 wherein
k is 1, 2, 3, 4 or 5,
m and n are independently of each other 0, 1, 2 or 3, with m + n ≤ 5, and
o is 0 or 1.

3. Display according to claim 1 or 2, **characterized in that** component A comprises one or more cyano compounds selected from the following formulae 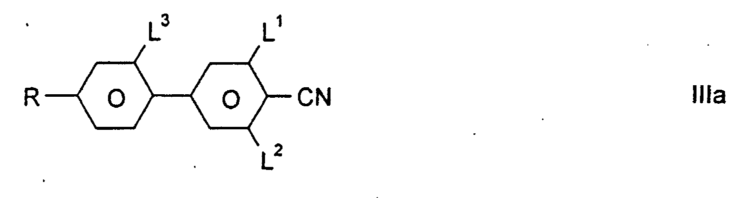 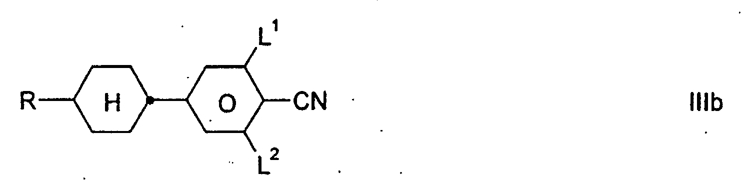 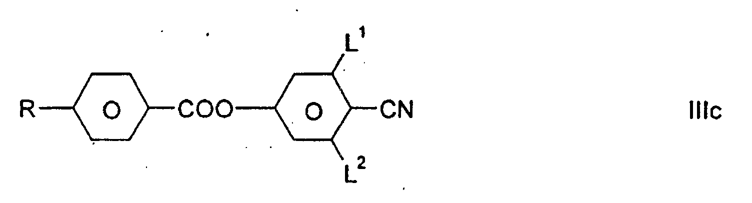 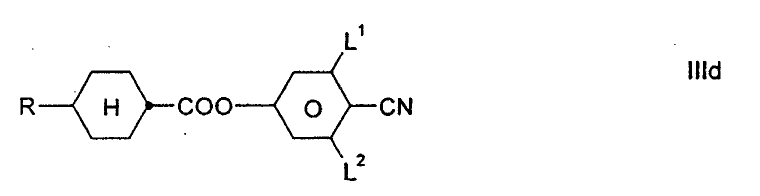 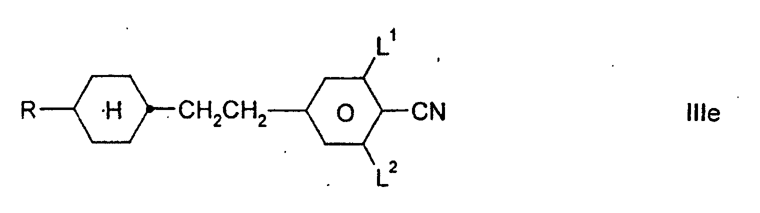 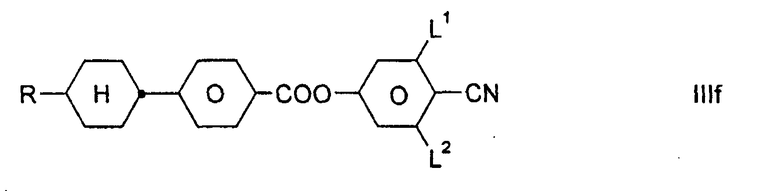 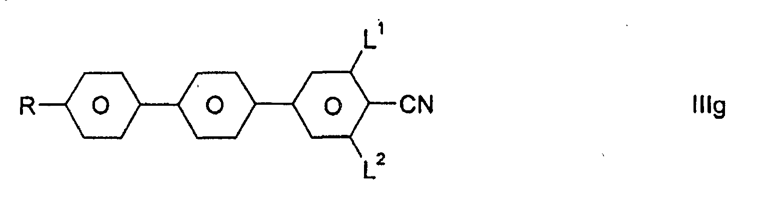 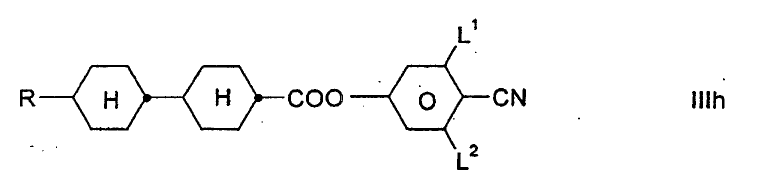 wherein R has one of the meanings of R¹ in formula I , and L¹, L² and L³ are independently of each other H or F.

4. Display according to at least one of claims 1 to 3, **characterized in that** it comprises one or more alkenyl compounds of formula VI 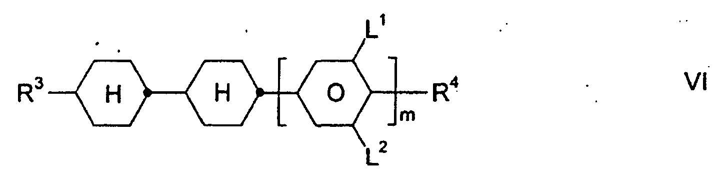 wherein
R³ is an alkenyl group with 2 to 7 C atoms,
R⁴ has one of the meanings of R¹ in formula I, or, in case m is 1, may also denote Q-Y,
Q is -CF₂-, -OCF₂-, -CFH-, -OCFH- or a single bond,
Y is F or Cl,
m is 0 or 1, and
L' and L² are independently of each other H or F.

5. Display according to at least one of claims 1 to 4, **characterized in that** it comprises at least one compound selected from the formulae VI-1a to VI-1e 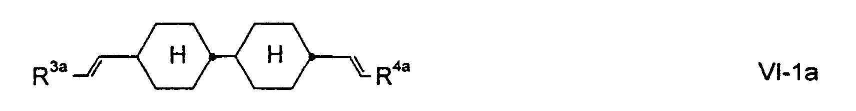 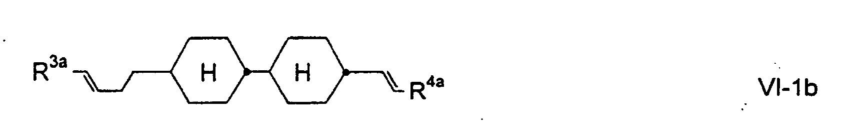 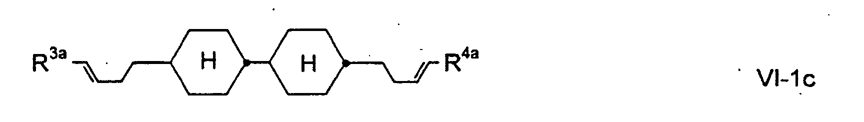 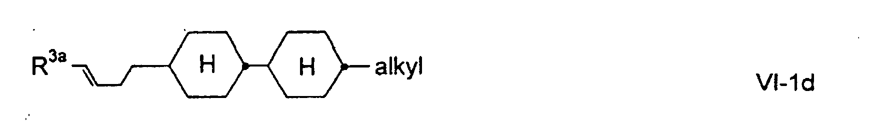 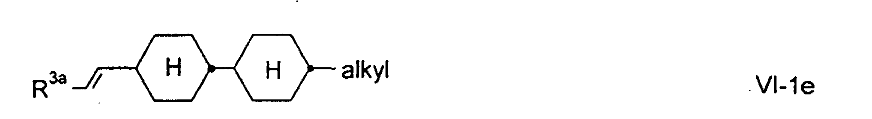 and/or at least one compound selected from the formulae VI-2a and VI-2b 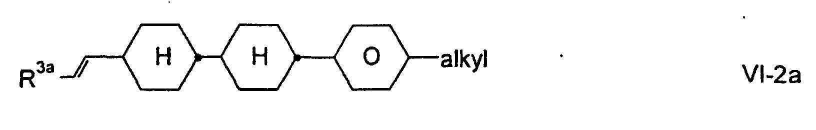 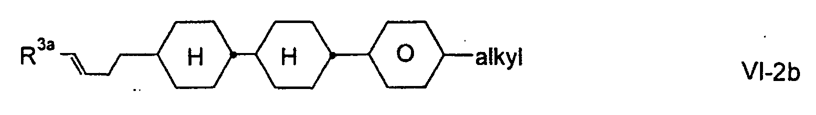 wherein R^{3a} and R^{4a} are independently of each other H, CH₃, C₂H₅ or n-C₃H₇ and alkyl is an alkyl group with 1 to 7 C atoms.

6. Display according to at least one of claims 1 to 5, **characterized in that** it comprises one or more tolane compounds selected from the following formulae 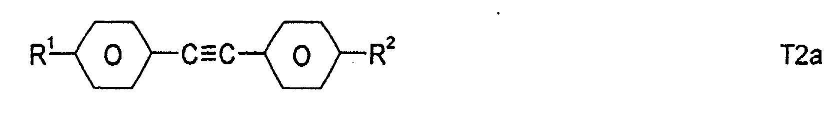 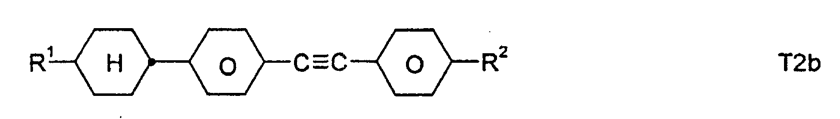 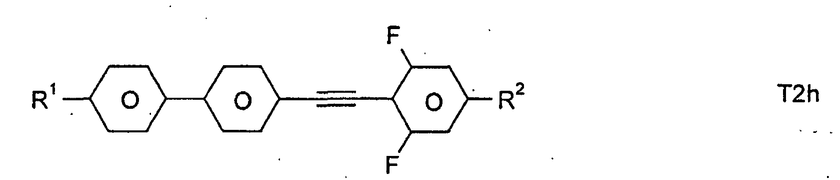 wherein R¹ and R² independently of each other have one of the meanings of formulae I and II.

7. Display according to at least one of claims 1 to 6, **characterized in that** the liquid crystal mixture comprises 3 to 35 % by weight of one or more compounds of formula I.

8. Display according to at least one of claims 1 to 7, **characterized in that** the liquid crystal mixture comprises 8 to 45 % by weight of one or more compounds of formula II.

9. Display according to at least one of claims 1 to 8, **characterized in that** the liquid crystal mixture comprises more than 50 % by weight of alkenyl compounds.

10. Liquid crystal mixture or composition as defined in at least one of claims 1 to 9.

## Patentansprüche

1. Supertwist nematische Flüssigkristallanzeige mit
- zwei planparallelen Trägerplatten, die zusammen mit einer Umrandung eine Zelle bilden,
- einer in der Zelle befindlichen nematischen Flüssigkristallmischung mit positiver dielektrischer Anisotropie,
- Elektrodenschichten mit darüberliegenden Orientierungsschichten auf den Innenseiten der Außenplatten, die jedes Pixel durch orthogonale Reihenwellenformen ansprechen,
- einem Anstellwinkel zwischen der Längsachse der Moleküle an der Oberfläche der Trägerplatten und den Trägerplatten von 1 Grad bis 30 Grad, und
- einem Verdrillungswinkel der Flüssigkristallmischung in der Zelle von Orientierungsschicht zu Orientierungsschicht dem Betrag nach zwischen 22,5 und 600°, wobei die nematische Flüssigkristallmischung im wesentlichen besteht aus
a) 15-80 Gew.-% einer flüssigkristallinen Komponente A, bestehend aus einer oder mehreren Verbindungen mit einer dielektrischen Anisotropie von über +1,5;
b) 20-85 Gew.-% einer flüssigkristallinen Komponente B, bestehend aus einer oder mehreren Verbindungen mit einer dielektrischen Anisotropie zwischen -1,5 und +1,5;
c) 0-20 Gew.-% einer flüssigkristallinen Komponente D, bestehend aus einer oder mehreren Verbindungen mit einer dielektrischen Anisotropie von unter -1,5, und
d) einer optisch aktiven Komponente C in einer Menge, dass das Verhältnis zwischen Schichtdicke (Abstand der planparallelen Trägerplatten) und natürlicher Ganghöhe der chiralen nematischen Flüssigkristallmischung 0,2 bis 1,3 beträgt,
**dadurch gekennzeichnet, dass** die Flüssigkristallmischung mindestens eine Verbindung der Formel I 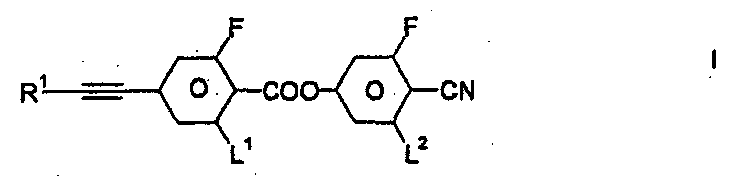 und mindestens eine Alkenylverbindung der Formel II 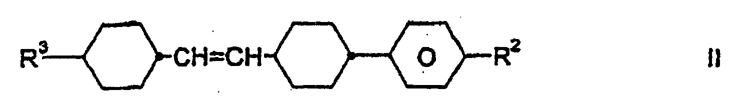 enthält, worin
R¹ und R² unabhängig voneinander eine gegebenenfalls fluorierte Alkyl-, Alkoxy-, Alkenyl- oder Alkenyloxygruppe mit 1 bis 12 C-Atomen bedeuten, worin eine oder zwei nicht benachbarte CH₂-Gruppen durch -O-, -CH=CH-, -CO-, - OCO- oder -COO- so ersetzt sein können, dass O-Atome einander nicht direkt benachbart sind ist,
R³ eine Alkenylgruppe mit 2 bis 7 C-Atomen bedeutet, und
L¹ und L² jeweils unabhängig H oder F bedeuten.

2. Anzeige nach Anspruch 1, **dadurch gekennzeichnet, dass** sie eine oder mehrere Verbindungen der Formel IIa 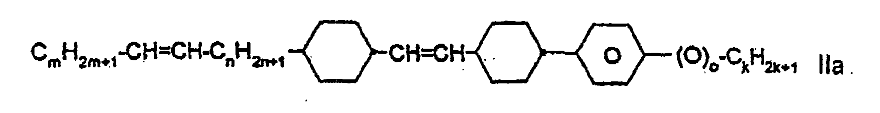 enthält, worin
k 1, 2, 3, 4 oder 5 bedeutet,
m und n unabhängig voneinander 0, 1, 2 oder 3 bedeuten, wobei m + n ≤ 5 ist, und
o 0 oder 1 bedeutet.

3. Anzeige nach Anspruch 1 oder 2, **dadurch gekennzeichnet, dass** die Komponente A eine oder mehrere Cyanverbindungen ausgewählt aus den folgenden Formeln 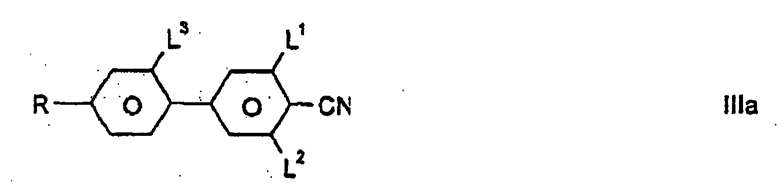 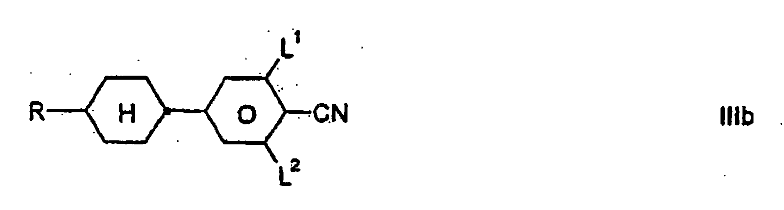 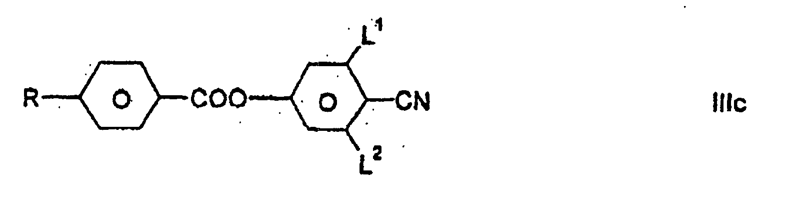 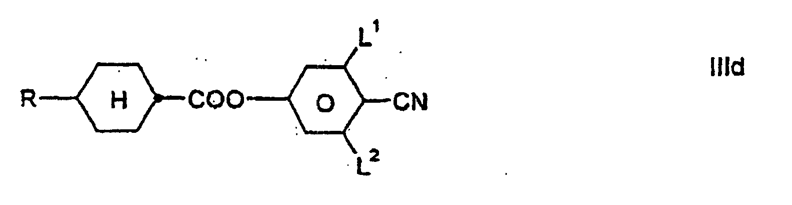 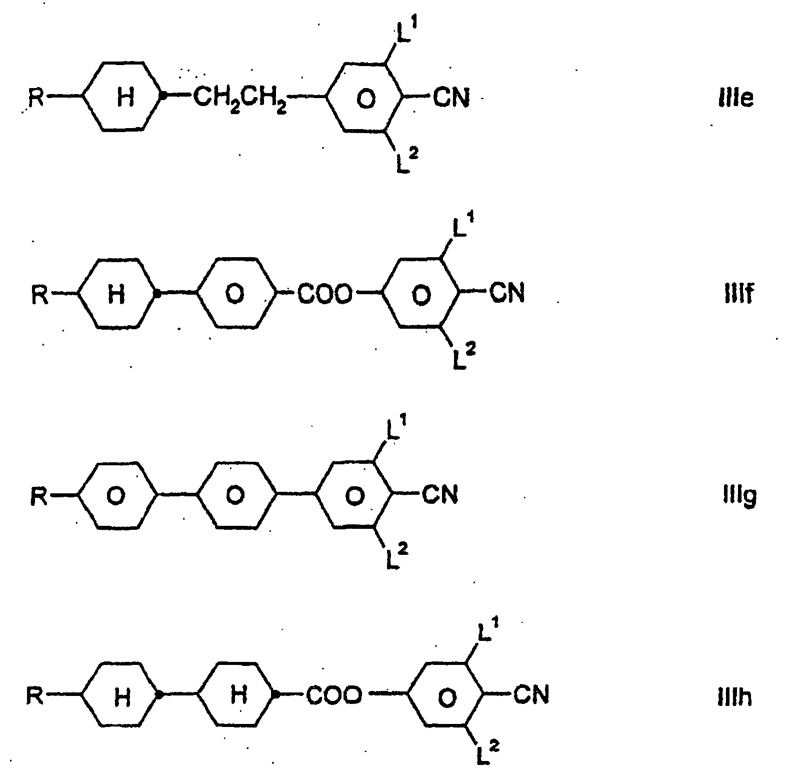 enthält, worin R eine der für R¹ in Formel I angegebenen Bedeutungen besitzt und L¹, L² und L³ unabhängig voneinander H oder F bedeuten.

4. Anzeige nach mindestens einem der Ansprüche 1 bis 3, **dadurch gekennzeichnet, dass** sie eine oder mehrere Alkenylverbindungen der Formel VI 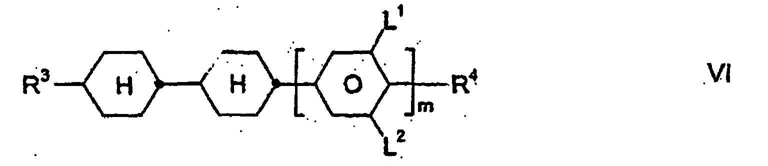 enthält, worin
R³ eine Alkenylgruppe mit 2 bis 7 C-Atomen bedeutet,
R⁴ eine der für R¹ in Formel I angegebenen Bedeutungen besitzt oder, wenn m 1 ist, auch Q-Y bedeuten kann,
Q -CF₂-, -OCF₂-, -CFH-, -OCFH- oder eine Einfachbindung bedeutet,
Y F oder Cl bedeutet,
m 0 oder 1 bedeutet, und
L¹ und L² unabhängig voneinander H oder F bedeuten.

5. Anzeige nach mindestens einem der Ansprüche 1 bis 4, **dadurch gekennzeichnet, dass** sie mindestens eine Verbindung ausgewählt aus den Formeln VI-1a bis VI-1e 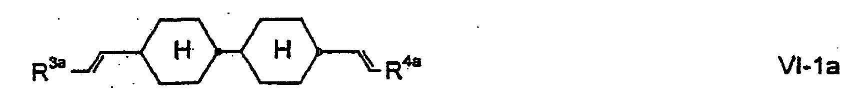 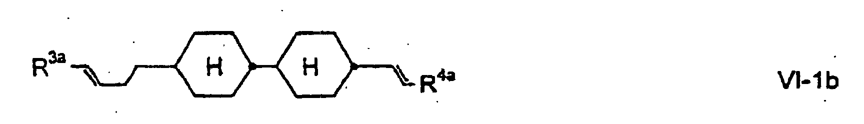 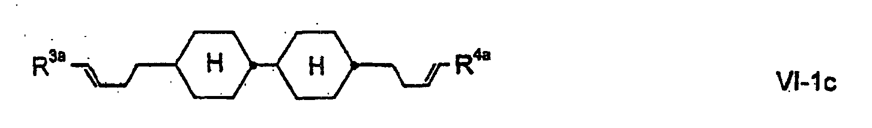 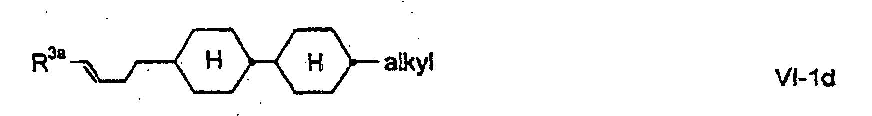 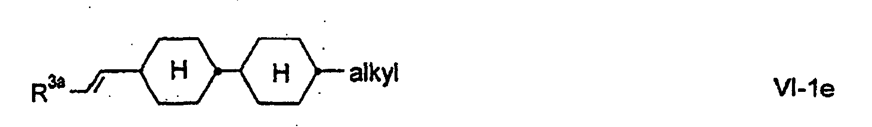 und/oder mindestens eine Verbindung ausgewählt aus den Formeln VI-2a und VI-2b 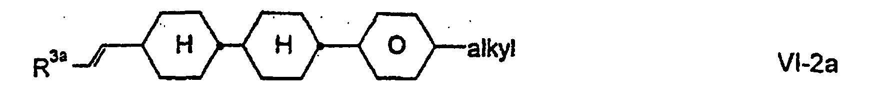 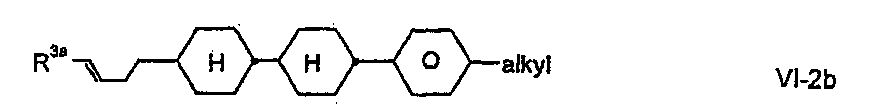 enthält, worin R^{3a} und R^{4a} unabhängig voneinander H, CH₃, C₂H₅ oder n-C₃H₇ bedeuten und alkyl eine Alkylgruppe mit 1 bis 7 C-Atomen bedeutet.

6. Anzeige nach mindestens einem der Ansprüche 1 bis 5, **dadurch gekennzeichnet, dass** sie eine oder mehrere Tolanverbindungen ausgewählt aus den folgenden Formeln 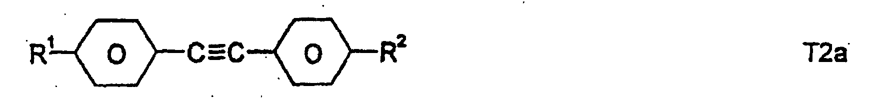 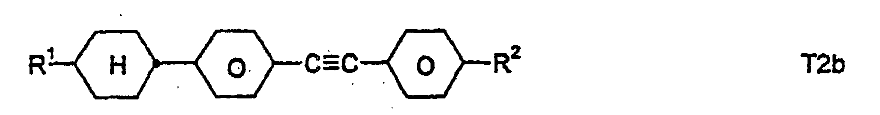 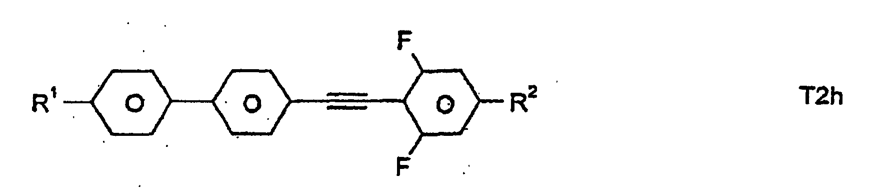 enthält, worin R¹ und R² unabhängig voneinander eine der für R¹ in Formeln I und II angegebenen Bedeutungen besitzt hat.

7. Anzeige nach mindestens einem der Ansprüche 1 bis 6, **dadurch gekennzeichnet, dass** die Flüssigkristallmischung 3 bis 35 Gew.-% einer oder mehrerer Verbindungen der Formel I enthält.

8. Anzeige nach mindestens einem der Ansprüche 1 bis 7, **dadurch gekennzeichnet, dass** die Flüssigkristallmischung 8 bis 45 Gew.-% einer oder mehrerer Verbindungen der Formel II enthält.

9. Anzeige nach mindestens einem der Ansprüche 1 bis 8, **dadurch gekennzeichnet, dass** die Flüssigkristallmischung mehr als 50 Gew.-% an Alkenylverbindungen enthält.

10. Flüssigkristallmischung oder -zusammensetzung wie in mindestens einem der Ansprüche 1 bis 9 definiert.

## Revendications

1. Écran à cristaux liquides nématiques super-torsion, contenant :
- deux plaques externes planes, parallèles, qui, avec un cache, forment une cellule,
- un mélange de cristaux liquides nématiques à anisotropie diélectrique positive, qui est présent dans la cellule,
- des couches d'électrodes avec des couches d'alignement superposées sur les faces internes des plaques externes, qui adressent chaque pixel par des formes d'ondes en rangs orthogonaux,
- un angle de pré-inclinaison entre l'axe longitudinal des molécules à la surface des plaques externes et les plaques externes, de 1° à 30° et
- un angle de torsion du mélange de cristaux liquides dans la cellule d'une couche d'alignement par rapport à une couche d'alignement, avec une valeur comprise entre 22,5 et 600°, dans lequel le mélange de cristaux liquides nématiques est essentiellement constitué de :
a) 15 à 80 % en poids d'un composé A de cristaux liquides, comprenant un ou plusieurs composés ayant une anisotropie diélectrique supérieure à +1,5 ;
b) 20 à 85 % en poids de composé B de cristaux liquides, comprenant un ou plusieurs composés ayant une anisotropie diélectrique comprise entre -1,5 et +1,5 ;
c) 0 à 20 % en poids de composé D de cristaux liquides, comprenant un ou plusieurs composés ayant une anisotropie diélectrique inférieure à -1,5 et
d) un composé C optiquement actif, dans une quantité telle que le rapport entre l'épaisseur de la couche (séparation des plaques externes planes, parallèles) et le pas naturel du mélange de cristaux liquides nématiques chiraux, se situe entre 0, 2 et 1,3,
**caractérisé en ce que** le mélange de cristaux liquides comprend au moins un composé de formule I 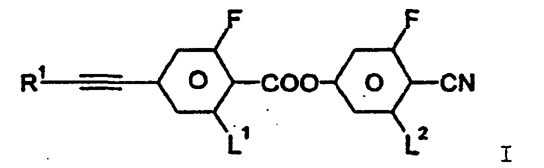 et au moins un composé alcényle de formule II 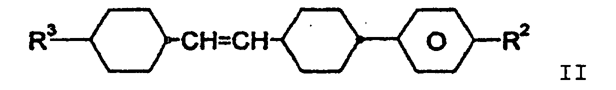 dans lequel
R¹ et R² sont indépendamment l'un de l'autre un groupement alkyle, alcoxy, alcényle ou alcényloxy avec 1 à 12 atomes de C, facultativement fluoré, dans lequel un ou deux groupement CH₂ adjacents peuvent être remplacés par -O-, - CH=CH-, -CO-, -OCO- ou -COO-, d'une manière telle que les atomes de 0 ne soient pas directement adjacents les uns aux autres, et sont un groupement alcényle avec 2 à 7 atomes de C,
R³ est un groupement alcényle avec 2 à 7 atomes de C et
L¹ et L² sont chacun indépendamment H ou F.

2. Ecran selon la revendication 1, **caractérisé en ce qu'**il comprend un ou plusieurs composés de formule IIa 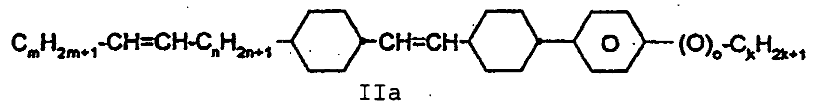 dans laquelle
k vaut 1, 2, 3, 4 ou 5,
m et n valent indépendamment l'un de l'autre 0, 1, 2 ou 3, avec m + n ≤ 5 et
o vaut 0 ou 1.

3. Ecran selon les revendications 1 ou 2, **caractérisé en ce que** le composé A comprend un ou plusieurs composés cyano choisis parmi les formules suivantes 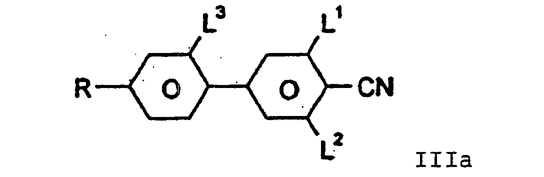 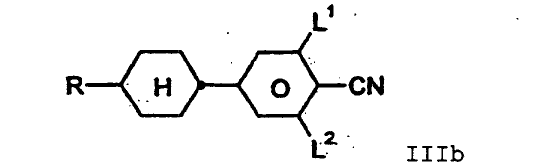 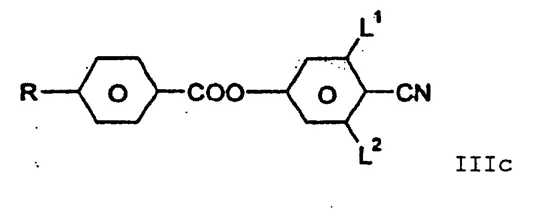 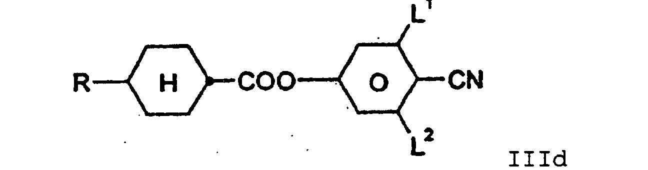 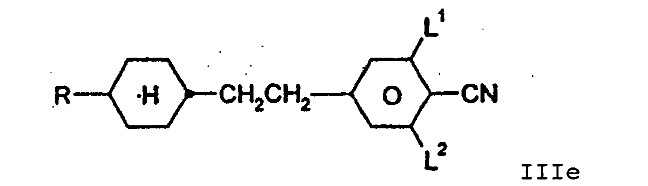 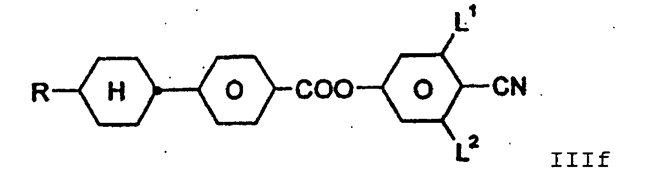 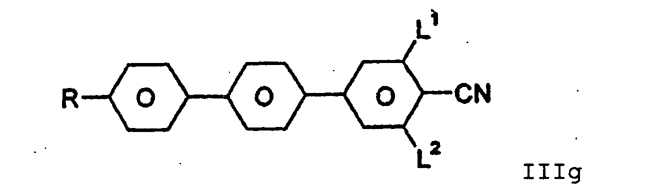 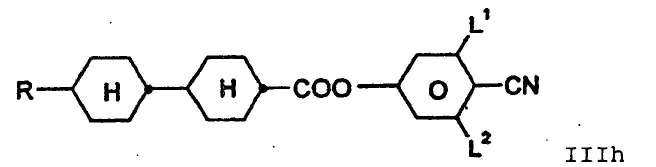 dans lesquelles R a l'une des significations de R¹ dans la formule I, et L¹, L² et L³ sont indépendamment les uns des autres H ou F.

4. Ecran selon l'une quelconque des revendications 1 à 3, **caractérisé en ce qu'**il comprend un ou plusieurs composés alcényle de formule VI 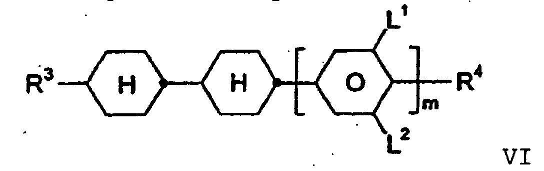 dans laquelle
R³ est un groupement alcényle avec 2 à 7 atomes de carbone,
R⁴ a l'une des significations de R¹ dans la formule I, ou dans le cas où m vaut 1, il peut aussi dénoter Q-Y,
Q est -CF₂-, -OCF₂-, -CFH-, -OCFH- ou une simple liaison,
Y est F ou Cl,
m vaut 0 ou 1 et
L¹ et L² sont indépendamment l'un de l'autre H ou F.

5. Ecran selon l'une quelconque des revendications 1 à 4, **caractérisées en ce qu'**il comprend au moins un composé choisi parmi les formules VI-1a à VI-1e 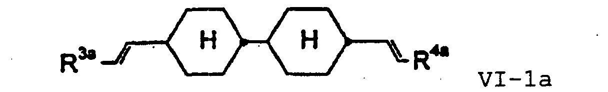 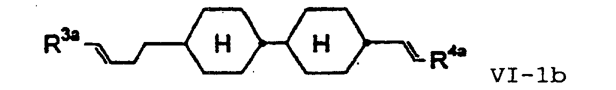 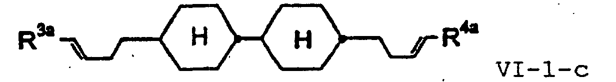 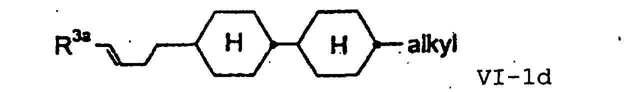 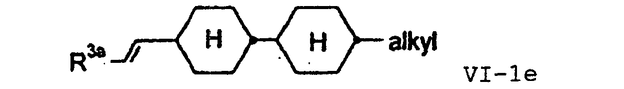 et/ou au moins un composé choisi parmi les formules VI-2a et VI-2b 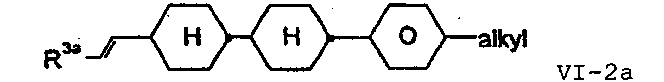 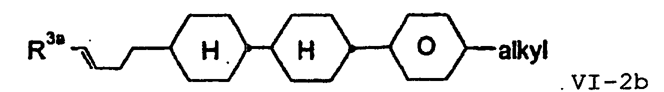 dans lesquelles R^{3a} et R^{4a} sont indépendamment l'un de l'autre H, CH₃, C₂H₅ ou n-C₃H₇ et un alkyle est un groupement alkyle avec 1 à 7 atomes de C.

6. Ecran selon l'une quelconque des revendications 1 à 5, **caractérisé en ce qu'**il comprend un ou plusieurs composés tolane choisis parmi les formules suivantes 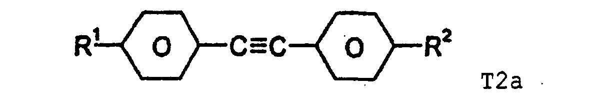 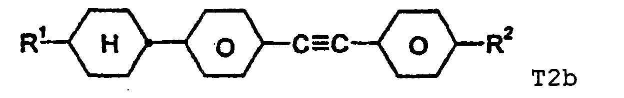 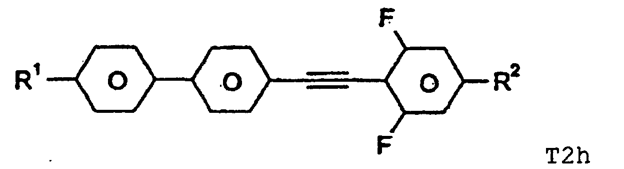 dans lesquelles R¹ et R² ont indépendamment l'un de l'autre les significations des formules I et II.

7. Ecran selon l'une quelconque des revendications 1 à 6, **caractérisé en ce que** le mélange de cristaux liquides comprend 3 à 35 % en poids d'un ou plusieurs composés de formule I.

8. Ecran selon l'une quelconque des revendications 1 à 7, **caractérisé en ce que** le mélange de cristaux liquides comprend 8 à 45 % en poids d'un ou plusieurs composés de formule II.

9. Ecran selon l'une quelconque des revendications 1 à 8, **caractérisé en ce que** le mélange de cristaux liquides comprend plus de 50 % en poids de composés alcényle.

10. Mélange ou composition de cristaux liquides tel(le) que défini(e) selon l'une quelconque des revendications 1 à 9.
